# EUROPEAN PATENT APPLICATION

(11) **EP 3 162 438 A1**
(43) Date of publication of application: **03.05.2017**
(21) Application number: 15382525.2
(22) Date of filing: 26.10.2015
(51) Int. Cl.: B01J 31/02

(54) **POLYMER SUPPORTED VICINAL DIAMINES AND THEIR USE AS CATALYST IN THE HAJOS-PARRISH-ENDER-SAUSER-WIECHERT AND ROBINSON ANNULATION REACTIONS**

(71) Applicant: Fundació Institut Català d'Investigació Química, 43007 Tarragona (ES)
(72) Inventor: AYATS RIUS, Carles, 17800 OLOT (ES); HENSELER, Andrea Helene, 50321 BRÜHL (DE); PERICÀS BRONDO, Miquel Àngel, 08950 ESPLUGUES DE LLOBREGAT (ES)
(74) Representative: ZBM Patents - Zea, Barlocci & Markvardsen

(57) **Abstract**

It is provided a chiral compound of formula (I) or a salt thereof

P-(A)n (I)

wherein:
n is an integer from 1 to 100.000;
A is a radical of formula (I') 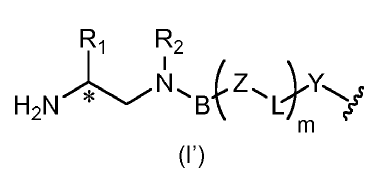 wherein:
R₁ is a radical selected from the group consisting of iso-propyl, tert-butyl, mesitilyl, 2,6-dimethylphenyl, 2-tolyl, adamantyl, and (C₃-C₆)cycloalkyl optionally substituted;
R₂ is a (C₁-C₆)alkyl radical; P is a polymeric support, a magnetic metal oxide nanoparticle, or a silicium oxide particle, bound through a linker -B-(Z-L)ₘ-Y- to the diamine moiety. It is also provided a process for its preparation and its use as a catalyst in the preparation of Wieland-Miescher and Hajos-Parrish ketones.

## Description

The present invention relates to the field of organocatalysis and to polymer supported chiral vicinal diamine catalysts. It also relates to the use of these compounds in the the Hajos-Parrish-Ender-Sauser-Wiechert and Robinson annulation reactions.

### BACKGROUND ART

Wieland-Miescher ketone (W-M ketone) and Hajos-Parrish ketone (H-P ketone) are useful starting materials for the synthesis of a broad range of products, particularly terpenoids and steroids. For example, W-M ketone is a precursor for the synthesis of some medically relevant compounds such as taxol, digitoxigenin, scopadulcic acid B, (-)-glaucarubolone, adrenosterone, and (+)-cleomeolide. Similarly, H-P ketone is a precursor for cortistatin A. Therefore, the mentioned ketones are of particular industrial interest in the preparation of some pharmaceutical products.

The Robinson annulation reaction of particular substrates and, in particular, the so-called Hajos-Parrish-Ender-Sauser-Wiechert reaction are well-known organocatalytic processes allowing obtaining W-M ketone and H-P ketone. The classical reaction uses proline as a catalyst in a polar aprotic solvent. Although H-P ketone is obtained with a high enantioselectivity, this is not the case for W-M ketone. Recently, new organocatalysts have been proposed in order to overcome some of the drawbacks of the traditional proline protocol, such as the use of high boiling point solvents and of relatively high catalyst loading, among them the tert-leucine derivative (S)-N,N-diethyl-3,3-dimethylbutane-1,2-diamine having been reported as the one providing the best results for both W-M ketone and H-P ketone (cf. P. X. Zhou et al. "Asymmetric Synthesis of Wieland-Miescher and Hajos-Parrish Ketones Catalyzed by an Amino-Acid-Derived Chiral Primary Amine" J. Org. Chem. 2012, 7vol. 7, pp. 2526-2530).

Chiral organocatalysts are commonly robust organic small molecules, stable under air and operating under aerobic conditions that can provide high stereoselectivities in a broad range of reactions. Nevertheless, they are usually used in relatively large amounts and are difficult to recycle and isolate from the reaction product. Thus, catalyst immobilization on polymers as a support has been considered as a way to easily recover and reuse the organocatalyst. Particularly, the use or Merrifield resin-supported proline as a recyclable catalyst for the Hajos-Parrish-Ender-Sauser-Wiechert reaction has been reported. However, the catalytic efficiency and selectivity was extremely poor (cf. L. Zhang et al. "Green Techniques for Organic Synthesis and Medicinal Chemistry", Chapter 5, "Supported Asymmetric Organocatalysis", Edited by Wei Zhang and Berkeley W. Cue, John Wiley & Sons, Ltd., First Edition, 2012, 99-106).

From what is described in the state of the art, there is still the need for highly active, selective and recyclable chiral organocatalysts fixed onto a support, such as a polymer, and useful in the preparation of W-M ketone and H-P ketone, said catalysts being further suitable for continuous flow processes.

### SUMMARY OF THE INVENTION

The inventors have developed a family of compounds comprising chiral vicinal diamine derivatives bound to a support through a linker, said compounds being useful as highly active and selective catalysts in the preparation of W-M ketone and H-P ketone and derivatives thereof. Surprisingly, these catalysts were found to be highly active and selective, providing higher yields while keeping enantioselectivity with a reduced reaction time. Additionally, the compounds have the further advantage of being easily separated from the reaction mixture, recyclable without significant loss of activity or selectivity, and suitable for continuous flow applications.

Thus, a first aspect of the invention refers to a chiral compound of formula (I) or a salt thereof

P-(A)ₙ (I)

wherein:
n is an integer from 1 to 100.000;
A is a radical of formula (I') 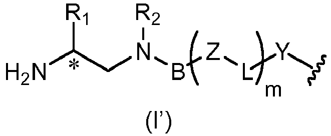
wherein:
   R₁ is a radical selected from the group consisting of iso-propyl, tert-butyl, mesitilyl, 2,6-dimethylphenyl, 2-tolyl, adamantyl, and (C₃-C₆)cycloalkyl optionally substituted with a radical selected from the group consisting of (C₁-C₆)alkyl, halogen, and
   (C₁-C₆)haloalkyl;
   R₂ is a (C₁-C₆)alkyl radical;
   B and L are each a biradical independently selected from the group consisting of (C₁-C₆)alkylene, phenylene, benzylene, -CH₂-C₆H₄-CH₂-, and biphenylene;
   Y and Z are each a biradical independently selected from the group consisting of -O-, -S-, -CONR₁₂-, -SO₂NR₁₂-, -NR₁₂CO-, NR₁₂SO₂-, and -NR₁₂-, wherein R₁₂ is selected from the group consisting of hydrogen, (C₁-C₆)alkyl, phenyl, and benzyl;
   m is an integer of 0 or 1; and
   P is selected from a polymeric support, a magnetic metal oxide nanoparticle and a silicium oxide particle;
   provided that when P is a silicium oxide particle, Y is O.

A second aspect of the invention refers to a process for the preparation of the compound as defined in the first aspect of the invention, which comprises the following steps:
(1) when P is a polymeric support:
   reacting a compound of formula (II) 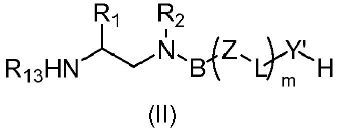 with a compound of formula P-(X)ₙ;
   wherein X is selected from the group consisting of halo, SO₃H, SO₂Cl, CO₂H, COCI, and NHR₁₂, wherein R₁₂ is selected from the group consisting of hydrogen, (C₁-C₆)alkyl, phenyl, and benzyl;
   Y' is a biradical selected from the group consisting of -O-, -S-, -COO-, -SO₂-, and NR₁₂, wherein R₁₂ is as defined above;
   R₁, R₂, B, L, Z, n and m are as defined in the first aspect of the invention; and
   R₁₃ is selected from the group consisting of H and PG, wherein PG is selected from the group consisting of *t*-butyl carbamate (BOC), trityl, tosyl, mesyl, benzyl carbamate (Cbz), 2,3-dichlorobenzyl carbamate, 2-(biphenylyl)isopropyl carbamate, and 9-fluorenylmethyl carbamate (Fmoc), isonicotinyl carbamate, 1-adamantyl carbamate, allyl carbamate, N-acetyl, N-benzoyl; N-alkyl and N-aryl; N-benzyl; N-Si, and N-benzenesulfenyl;
   followed by the deprotection of the protected amine when R₁₃ is PG; or , alternatively,
(2) when P is a metal oxide nanoparticle,
   (i) preparing a metal oxide nanoparticle by heating a mixture comprising an acetylacetonate salt of a metal selected from iron (III) and cobalt (II), and a surfactant;
   (ii) contacting the metal oxide nanoparticle obtained in (i) with a capping agent formula (O(C₁-C₃)alkyl)₃Si-(C₁-C₆)alkyl-X, wherein X is as described above; and
   (iii) reacting the nanoparticle obtained in step (ii) with a compound of formula (II) as described above; followed by the deprotection of the protected amine when R₁₃ is PG; or, alternatively,
(3) when P is a silicium oxide particle,
   (i) preparing a silicium oxide particle;
   (ii) reacting the particle obtained in step (i) with a compound of formula (II) as described above wherein Y' is -O-, followed by the deprotection of the protected amine when R₁₃ is PG.

A third aspect of the invention refers to the use of the compound according to the first aspect of the invention as a catalyst.

When used as catalysts, the compounds of the invention are particularly active and selective in the preparation of W-M ketone, H-P ketone, and derivatives thereof. The compounds of the invention afford low reaction times, can be recycled without significant loss of activity and selectivity and are suitable for the preparation of the mentioned compounds in continuous flow conditions. Flow chemistry is increasingly perceived as a replacement technology for traditional batch processing. Thus, many negative issues associated to batch processing, such as solvent waste (mainly associated to work-up), thermal risk, and problems associated to scale-up are completely avoided in flow processing. The catalysts of the invention can be used under continuous flow conditions, i.e. by the injection of a solution of reactants into a reactor comprising the compound of the invention.

A fourth aspect of the invention relates to a process for the preparation of a compound of formula (VI) 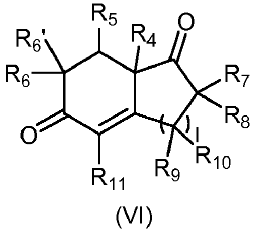 comprising contacting a compound of formula (VIIa); or, alternatively a mixture of compounds (Vllb) and (VIIc) 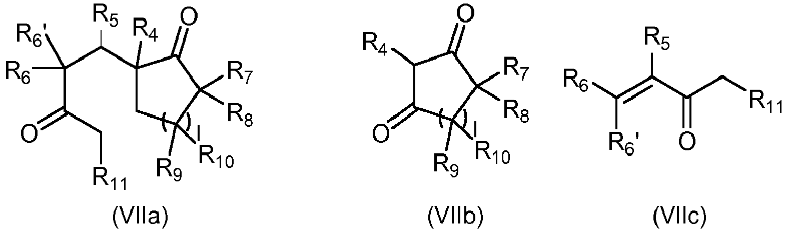 with a salt of a compound of formula (I) as defined herein above and below, in the presence of a weak acid and in the presence of a polar solvent; wherein:
I is an integer from 1 to 3;
R₄ is a radical selected from the group consisting of (C₁-C₆)alkyl, (C₁-C₆)alkyl substituted with at least one radical selected from the group consisting of halogen, (C₁-C₆)alkyloxycarbonyl, (C₁-C₆)alkylcarbonyloxy, phenyl, nitrile, and nitro, (C₂-C₆)alkenyl, (C₂-C₆)alkenyl substituted with at least one radical selected from the group consisting of halogen, (C₁-C₆)alkyloxycarbonyl, (C₁-C₆)alkylcarbonyloxy, nitrile and nitro, (C₂-C₆)alkynyl, (C₂-C₆)alkynyl substituted with at least one radical selected from the group consisting of halogen, (C₁-C₆)alkyloxycarbonyl, (C₁-C₆)alkylcarbonyloxy, nitrile and nitro, (C₆-C₂₀)aryl, (C₆-C₂₀)aryl substituted with a radical selected from the group consisting of (C₁-C₆)alkyl, (C₁-C₆)alkyloxy, (C₁-C₆)alkylcarbonyloxy, (C₁-C₆)alkylcarbonyl, (C₁-C₆)alkyloxycarbonyl, and halogen, (C₅-C₂₀)heteroaryl, and (C₅-C₂₀)heteroaryl substituted with a radical selected from the group consisting of (C₁-C₆)alkyl, (C₁-C₆)alkyloxy, (C₁-C₆)alkylcarbonyloxy, (C₁-C₆)alkylcarbonyl, (C₁-C₆)alkyloxycarbonyl, and halogen;
R₅, R₆, R₆', R₇ and R₈ are each independently selected from the group consisting of hydrogen, halogen, (C₁-C₆)haloalkyl and (C₁-C₆)alkyl;
R₉ and R₁₀ are each hydrogen; or, alternatively,
one of the pairs R₇ and R₉ or R₈ and R₁₀, together with the carbon atoms to which they are attached, form a carbocyclic ring system comprising from 3 to 7 membered carbocyclic rings, said rings being independently saturated, unsaturated or aromatic and being optionally substituted with one or more groups selected from the group consisting of (C₁-C₆)alkyl, (C₁-C₆)alkyloxy, (C₁-C₆)haloalkyl, (C₁-C₆)alkylcarbonyloxy, (C₁-C₆)alkylcarbonyloxy, nitro , cyano and halogen; and
R₁₁ is a radical selected from the group consisting of hydrogen, (C₁-C₆)alkyl and (C₁-C₆)haloalkyl.

A fifth aspect of the invention relates to a process for the preparation of a pharmaceutically active compound, or a pharmaceutically acceptable salt thereof, comprising in its chemical structure a moiety derived from compound of formula (VI) 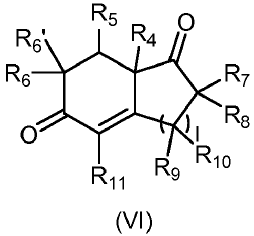 wherein R₄, R₅, R₆, R₆', R₇, R₈, R₉, R₁₀, and R₁₁ are as defined above, the process comprising a) carrying out the process for the preparation of a compound of formula (VI) as defined above,
and further comprising: b) submitting the compound of formula (VI) to several reactions until obtaining the pharmaceutically active compound, or a pharmaceutically acceptable salt thereof; c) optionally converting the obtained pharmaceutically active compound into the free acid form of the pharmaceutically active compound or into a pharmaceutically acceptable salt thereof; and d) optionally, converting the resulting free acid or base form of the pharmaceutically active compound into a pharmaceutically acceptable salt thereof, or converting the resulting pharmaceutically acceptable salt into their free acid or base form, or converting the resulting pharmaceutically acceptable salt into a different pharmaceutically acceptable salt of the pharmaceutically active compound.

As mentioned above, thanks to their robustness, the compounds of the invention are more active catalysts, can be used at lower loadings under flow conditions, and provide reduced reaction times than those described in the prior art, therefore giving rise to high turnover numbers and/or high turnover frequency.

### DETAILED DESCRIPTION OF THE INVENTION

All terms as used herein in this application, unless otherwise stated, shall be understood in their ordinary meaning as known in the art. Other more specific definitions for certain terms as used in the present application are as set forth below and are intended to apply uniformly throughout the specification and claims unless an otherwise expressly set-out definition provides a broader definition.

The term "alkyl" refers to a saturated straight or branched hydrocarbon chain which contains the number of carbon atoms specified in the description or claims. Thus, the term "(C₁-C₆)alkyl" refers to a saturated straight, or branched hydrocarbon chain containing from 1 to 6 carbon atoms. Examples include the group methyl, ethyl, propyl, isopropyl, butyl, isobutyl, *sec*-butyl, *tert*-butyl, n-pentyl, neo-pentyl and *n-*hexyl. Also, the term "(C₁-C₁₂)alkyl" refers to a saturated straight, or branched hydrocarbon chain containing from 1 to 12 carbon atoms.

The term "halogen", also referred to as halo, refers to fluoro, chloro, bromo or iodo.

The term (C₁-C₆)haloalkyl refers to a group resulting from the replacement of one or more hydrogen atoms from a (C₁-C₆)alkyl group with one or more, preferably from 1 to 6, halogen atoms, which can be the same or different. Examples include, among others, trifluoromethyl, fluoromethyl, 1-chloroethyl, 2-chloroethyl, 1-fluoroethyl, 2-fluoroethyl, 2-bromoethyl, 2-iodoethyl, 2,2,2-trifluoroethyl, pentafluoroethyl, 3-fluoropropyl, 3-chloropropyl, 2,2,3,3-tetrafluoropropyl, 2,2,3,3,3-pentafluoropropyl, heptafluoropropyl, 4-fluorobutyl, and nonafluorobutyl.

The term "(C₁-C₆)alkylene" or "(C₁-C₁₂)alkylene" refers to a biradical resulting from the removal of one hydrogen atom of (C₁-C₆)alkyl or of (C₁-C₁₂)alkyl, respectively.

The term "polymeric support" is art-recognized and refers to a polymer which is soluble, partially soluble or insoluble in the reaction conditions and onto which the active unit is anchored directly or through a linker. In the context of the invention, the polymeric support can be porous and the polymer can also be cross-linked. In particular embodiments, the polymeric support is partially soluble or insoluble in the reaction conditions. Non-limitative examples of polymeric support include cross-linked polystyrene such as polystyrene cross-linked with divinylbenzene, polyacrylate, polyacrylamide, polyvinylpyrrolidinone, polysiloxane, polybutadiene, polyisoprene, polyalkane, polyoxazoline, polyether, polyethylene glycols, polyvinyl alcohols, and mixtures and co-polymers thereof.

The term "amine protecting group" is known in the art, and refers to a chemical moiety or group which protects or prevents an amine moiety or group from participating with or interfering with one or more chemical synthetic steps and its removal restores the moiety to its original active state. The term protecting group as used herein refers to those groups intended to protect against undesirable reactions during synthetic procedures. Such protecting groups are well known to those skilled in the art. Examples of amine protecting groups can be found in "Greene's Protective Groups in Organic Chemistry", Edited by Theodora W. Greene and Peter G. M. Wuts, John Wiley & Sons, Ltd., Third Edition, 1999, pp. 495-653. Amine protecting groups can be removed with *inter alia* acid, base, fluoride ions, hydrogenation, metals such as zinc as well as by numerous other methods which are well known in the art, depending on the specific protecting group used. One of ordinary skill in the art can readily choose an appropriate protecting group to facilitate synthetic reactions according to method aspects of the present invention without engaging in undue experimentation. Further non-limitative examples of amine protecting groups include, without being limited to, carbamates such as *t*-butyl (BOC), benzyl (Cbz), 2,3-dichlorobenzyl, 2-(biphenylyl)isopropyl, and 9-fluorenylmethyl (Fmoc), isonicotinyl, 1-adamantyl, allyl, trityl; sulfonamides such as tosyl, mesyl; amides such as *N*-formyl, *N*-acetyl, *N*-benzoyl; *N*-alkyl and *N*-aryl; amines such as *N*-benzyl; imine derivatives, *N*-heteroatom derivatives such as N-borane derivatives, *N*-nitro, *N*-Si, *N-*benzenesulfenyl.

The term "polar solvent" refers to a solvent having molecules whose electric charges are unequally distributed, leaving one end of each molecule more positive than the other. Examples of polar solvents are, without being limited to, water, methanol, ethanol, propanol, isopropyl alcohol, butanol, acetic acid, formic acid, formamide, acetone, ethyl acetate, methyl ethyl ketone, dichloromethane, 2-methyltetrahydrofuran, acetonitrile, tetrahydrofuran, dimethylformamide, and dimethyl sulfoxide.

The term "weak acid" refers to an acid that is partially dissociated in an aqueous solution. Examples of weak acids include, without being limited to, propanoic, butanoic, acetic acid, benzoic acid, optionally substituted at any available position with a group selected from the group consisting of halogen and nitro, camphorsulfonic acid, sulfinic acid, (R)- or (S)-mandelic acid, propanoic acid, and 4-nitrophenol. Particularly, a weak acid is an acid with a pKₐ value in the approximate range 2 to 10 in water.

In the context of the invention, the term "continuous flow process" or "process under continuous flow conditions" refers to a process wherein the reagents of the process, either in solution (i.e. dissolved into a solvent) or neat, are constantly fed into a reactor in the right proportions, thus allowing for the continuous production of the product. When a catalyst is present, the reactor further comprises the catalyst, preferably as an insoluble solid.

In the context of the invention, the term "yield", refers to the ratio, expressed as a percentage, of the molar amount of the compound of formula (VI) 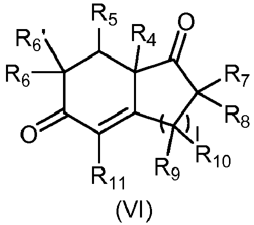 as defined herein above and below produced to the molar amount of compound of formula (VIIa) or, alternatively, of formula (Vllb) 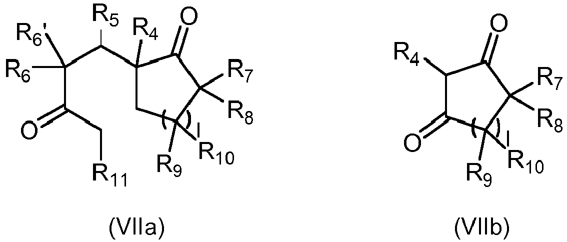 as defined herein above and below, engaged in the process for its preparation.

The "enantiomeric excess" or "ee" is a measure of the excess of one enantiomer over a racemic mixture of a chiral compound, which is commonly expressed as a percentage. Enantiomeric excess is defined as the absolute difference between the mole fraction of each enantiomer [ee = F(+)- F(-)]. If the moles of each enantiomer are known, the percent enantiomeric excess can be determined by the following formula: ee = ((R-S)/(R+S)) x 100, where R and S are the respective molar fractions of enantiomers in the mixture such that R+S=1.

The term "size" refers to a characteristic physical dimension. For example, in the case of a nanoparticle that is substantially spherical, the size of the nanoparticle corresponds to the diameter of the nanoparticle. In the case of a nanoparticle that is substantially rod-shaped with a substantially circular cross-section, such as nanowire or a nanotube, the size of the nanoparticle corresponds to the diameter of the cross-section of the nanoparticle. In the case of a nanoparticle that is substantially box-shaped, such as a nanocube, a nanobox, or a nanocage, the size of the nanoparticle corresponds to the maximum edge length. When referring to a set of nanoparticles as being of a particular size, it is contemplated that the set of nanoparticles can have a distribution of sizes around the specified size. Thus, as used herein, a size of a set of nanoparticles can refer to a mode of a distribution of sizes, such as a peak size of the distribution of sizes.

The term "a moiety derived from compound of formula (VI)" relates to a chemical entity (i.e. molecule, radical or chemical group) obtainable by chemical modification of compound of formula (VI) following procedures known in the art.

As mentioned above, the inventors have developed compounds comprising chiral vicinal diamine derivatives bound to a support through a linker, particularly a polymer supported vicinal diamine catalyst, useful in the preparation of W-M and H-P ketones. The catalyst of the invention is robust, chemically resistant to moisture and oxygen, and can be easily handled. Thanks to its high activity, selectivity and robustness, it can be re-used in further reactions without significantly losing its activity and, thus, it is useful in continuous flow applications. Thus, advantageously, in contrast with the catalysts described in the state of the art for the preparation of W-M and H-P ketones, the catalyst of the invention can be easily recovered from the reaction mixture, for example by filtration or centrifugation without a significant loss of activity, while keeping the high yields and enantiomeric excesses achieved by using the non-immobilized catalyst. Consequently, the process for the preparation of W-M and H-P ketones by the use of the catalyst of the invention is more cost-effective and provides an increased productivity compared to the processes of the prior art while maintaining a high yield and enantiomeric excess. Optionally, the catalyst can also be regenerated.

In a particular embodiment of the first aspect of the invention, n is an integer from 1 to 50.000, from 10 to 100.000, from 10 to 50.000, from 10 to 10.000, from 100 to 100.000, from 100 to 50.000, or from 100 to 10.000.

In another particular embodiment of the first aspect of the invention, optionally in combination with one or more features of the particular embodiments defined above, R₁ is a radical selected from the group consisting of iso-propyl, tert-butyl, adamantyl, and (C₃-C₆)cycloalkyl. In a more particular embodiment of the first aspect of the invention, R₁ is a radical selected from the group consisting of iso-propyl, tert-butyl, and adamantyl. In a more particular embodiment of the first aspect of the invention, R₁ is a tert-butyl.

In another particular embodiment of the first aspect of the invention, optionally in combination with one or more features of the particular embodiments defined above, R₂ is a radical selected from the group consisting of methyl, ethyl and propyl. In a more particular embodiment, optionally in combination with one or more features of the particular embodiments defined above, R₂ is ethyl.

In another particular embodiment of the first aspect of the invention, optionally in combination with one or more features of the particular embodiments defined above, B is a biradical independently selected from the group consisting of (C₁-C₆)alkylene, phenylene, benzylene, and -CH₂-C₆H₄-CH₂. In a more particular embodiment of the first aspect of the invention, optionally in combination with one or more features of the particular embodiments defined above, B is a biradical independently selected from the group consisting of -CH₂-CH₂-, phenylene, benzylene, and -CH₂-C₆H₄-CH₂-. In a more particular embodiment of the first aspect of the invention, optionally in combination with one or more features of the particular embodiments defined above, B is -CH₂-CH₂-.

In another particular embodiment of the first aspect of the invention, optionally in combination with one or more features of the particular embodiments defined above, Z is a biradical independently selected from the group consisting of -O-, -CONR₁₂-, -NR₁₂CO- and -NR₁₂-, wherein R₁₂ is selected from the group consisting of hydrogen, (C₁-C₆)alkyl, phenyl and benzyl.

In another particular embodiment of the first aspect of the invention, optionally in combination with one or more features of the particular embodiments defined above, L is a biradical independently selected from the group consisting of methylene, ethylene, phenylene, benzylene and -CH₂-C₆H₄-CH₂-.

In another particular embodiment of the first aspect of the invention, optionally in combination with one or more features of the particular embodiments defined above, P is a polymeric support and Y is a biradical independently selected from the group consisting of -O-, -S-, -CONR₁₂-, -SO₂NR₁₂-, -NR₁₂CO-, and NR₁₂SO₂-, wherein R₁₂ is selected from the group consisting of hydrogen, (C₁-C₆)alkyl, phenyl, and benzyl. More particularly, Y is a biradical independently selected from the group consisting of -O-, -S-, -CONR₁₂-, and -NR₁₂CO, wherein R₁₂ is selected from the group consisting of hydrogen, (C₁-C₆)alkyl, phenyl, and benzyl. Even more particularly, Y is a biradical independently selected from the group consisting of -O-, and -S-. Still more particulary, Y is -O-.

In another particular embodiment of the first aspect of the invention, optionally in combination with one or more features of the particular embodiments defined above, m is 0.

In another particular embodiment of the first aspect of the invention, optionally in combination with one or more features of the particular embodiments defined above, B is a (C₁-C₆)alkylene, Y is -O-, and m is 0. More particularly, B is -CH₂-CH₂-, Y is -O- and m is 0.

In another particular embodiment of the compound of the invention, optionally in combination with one or more features of the particular embodiments defined above, P is a polymeric support. Particularly, P is a polymeric support selected from the group consisting of polystyrene, a polyacrylate, a polyacrylamide, a polyvinylpyrrolidinone, a polysiloxane, a polybutadiene, a polyisoprene, a polyalkane, a polyoxazoline, a polyether, mixtures and co-polymers thereof. More particularly, P is polystyrene, and even more particularly P is a cross-linked polystyrene-divinylbenzene polymer. In this particular embodiment, the polymeric support is a cross-linked polystyrene-divinylbenzene polymer wherein the polymer comprises from 0.5 to 2 weight% of divinylbenzene. Such polymers are porous and are known in the art.

In another particular embodiment of the first aspect of the invention, optionally in combination with one or more features of the particular embodiments defined above, P is a polymeric support; R₁ is tert-butyl; R₂ is ethyl, m is 0; B is ethylene and Y is -O-.In another particular embodiment of the first aspect of the invention, optionally in combination with one or more features of the particular embodiments defined above, P is a cross-linked polystyrene-divinylbenzene polymer; R₁ is tert-butyl; R₂ is ethyl, m is 0; B is ethylene and Y is -O-.

The beneficial contribution of the catalysts of the invention in the preparation of W-M and H-P ketones is an enhanced reactivity (higher turnover numbers, high turnover frequencies and reduced reaction times can be achieved) with respect to the catalysts of the prior art without compromising the yield and enantiomeric excess obtained with the non-immobilized catalyst.

In another particular embodiment of the compound of the invention, optionally in combination with one or more features of the particular embodiments defined above, P is a magnetic metal oxide nanoparticle. Particularly, the magnetic metal oxide is selected from iron oxide and cobalt oxide. More particularly, the magnetic metal oxide is iron oxide. In a particular embodiment, optionally in combination with one or more features of the particular embodiments defined above, when P is a magnetic metal oxide nanoparticle, the size of the nanoparticle is from 5 nm to 1.000 nm.

In another particular embodiment of the compound of the invention, optionally in combination with one or more features of the particular embodiments defined above, P is a silicium oxide particle. Particularly, the size of the silicium oxide particles is from 5 nm to 100 µm. Silicium oxide particles are known in the art and are commercially available.

In a particular embodiment of the first aspect of the invention, the compound of formula (I) is in the form of a salt. Particularly, the acid forming the salt is selected from the group consisting of trifluoroacetic acid, trifluoromethanesulfonic acid, phosposhoric acid, acetic acid, and hydrochloric acid. More particularly, the acid forming the salt is trifluoromethanesulfonic acid.

According to the second aspect, the invention provides a process for the preparation of the catalysts of the invention.

As commented above, when P is a polymeric support, the compound of formula (I) of the invention can be prepared by reacting a compound of formula (II) 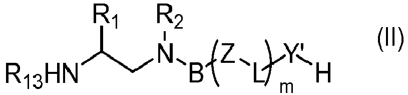 with a compound of formula P-(X)ₙ, wherein X is selected from the group consisting of halo, SO₃H, SO₂Cl, CO₂H, COCI, and NHR₁₂, wherein R₁₂ is selected from the group consisting of hydrogen, (C₁-C₆)alkyl, phenyl, and benzyl; Y' is a biradical selected from the group consisting of -O-, -S-, -COO-, -SO₂-, and -NR₁₂-, wherein R₁₂ is as defined above; R₁, R₂, B, L, Z, n, and m are as defined in any of the particular embodiments of the first aspect of the invention defined above; and R₁₃ is selected from the group consisting of H and PG, wherein PG is selected from the group consisting of *t*-butyl carbamate (BOC), trityl, tosyl, mesyl, benzyl carbamate (Cbz), 2,3-dichlorobenzyl carbamate, 2-(biphenylyl)isopropyl carbamate, 9-fluorenylmethyl carbamate (Fmoc), isonicotinyl carbamate, 1-adamantyl carbamate, allyl carbamate, *N*-acetyl, *N*-benzoyl, *N*-alkyl, *N*-aryl, *N*-benzyl, *N*-Si, and *N*-benzenesulfenyl; followed by the deprotection of the protected amine.

In a more particular embodiment of the second aspect of the invention, when in the compound of formula (I) P is a polymeric support and Y is -O-, then X is halo and Y' is -O-. In a more particular embodiment of the second aspect of the invention, when in the compound of formula (I) P is a polymeric support and Y is -O-, then X is halo, R₁₃ is H and Y' is -O-. In a more particular embodiment of the second aspect of the invention, when in the compound of formula (I) P is a polymeric support and Y is -S-, then X is halo and Y' is -S-. In a more particular embodiment of the second aspect of the invention, when in the compound of formula (I) P is a polymeric support and Y is - S-, then X is halo, R₁₃ is H and Y' is -S-. In a more particular embodiment of the second aspect of the invention, when in the compound of formula (I) P is a polymeric support and Y is -CONR₁₂-, then X is -NHR₁₂ and Y' is -COO-. In a more particular embodiment of the second aspect of the invention, when in the compound of formula (I) P is a polymeric support and Y is -CONR₁₂-, then X is -NHR₁₂, R₁₃ is PG and Y' is - COO-. In a more particular embodiment of the second aspect of the invention, when in the compound of formula (I) P is a polymeric support and Y is -SO₂NR₁₂-, then X is -NHR₁₂ and Y' is -SOO-. In a more particular embodiment of the second aspect of the invention, when in the compound of formula (I) P is a polymeric support and Y is - SO₂NR₁₂-, then X is -NHR₁₂, R₁₃ is PG and Y' is -SOO-. In a more particular embodiment of the second aspect of the invention, when in the compound of formula (I) P is a polymeric support and Y is -NR₁₂CO-, then X is selected from -COOH and - COCI and Y' is-NR₁₂-. In a more particular embodiment of the second aspect of the invention, when in the compound of formula (I) P is a polymeric support and Y is - NR₁₂CO-, then X is selected from -COOH and -COCI, R₁₃ is PG and Y' is-NR₁₂-. In a more particular embodiment of the second aspect of the invention, when in the compound of formula (I) P is a polymeric support and Y is -NR₁₂SO₂-, then X is selected from -SO₃H and -SO₂Cl and Y' is -NR₁₂-. In a more particular embodiment of the second aspect of the invention, when in the compound of formula (I) P is a polymeric support and Y is -NR₁₂SO₂-, then X is selected from -SO₃H and -SO₂Cl, R₁₃ is PG and Y' is -NR₁₂-. In a more particular embodiment of the second aspect of the invention, when in the compound of formula (I) P is a polymeric support and Y is -NR₁₂-, then X is halo and Y' is -NR₁₂-. In a more particular embodiment of the second aspect of the invention, when in the compound of formula (I) P is a polymeric support and Y is -NR₁₂-, then X is halo, R₁₃ is PG and Y' is -NR₁₂-.

In a particular embodiment of the second aspect of the invention, PG is selected from the group consisting of *t*-butyl carbamate (BOC), trityl, tosyl, mesyl, benzyl carbamate (Cbz), 2,3-dichlorobenzyl carbamate, 2-(biphenylyl)isopropyl carbamate, 9-fluorenylmethyl carbamate (Fmoc), isonicotinyl carbamate, 1-adamantyl carbamate, allyl carbamate, and *N*-benzenesulfenyl. In a more particular embodiment of the second aspect of the invention, PG is selected from the group consisting of *t*-butyl carbamate (BOC), benzyl carbamate (Cbz), 2,3-dichlorobenzyl carbamate, 2-(biphenylyl)isopropyl carbamate, and 9-fluorenylmethyl carbamate (Fmoc). In an even more particular embodiment of the second aspect of the invention, PG is *t*-butyl carbamate (BOC).

Suitable methods to carry out the deprotection step are well known in the art and will become apparent to the skilled in the art. For instance, *t*-butyl carbamate can be cleaved by acidic hydrolysis, benzyl carbamate can be cleaved by catalytic hydrogenolysis, 2-(biphenylyl)isopropyl carbamate can be cleaved by dilute acetic acid, 9-fluorenylmethyl carbamate can be cleaved by β-elimitanion with base, osonicotinyl can be cleaved by reduction with zinc in acetic acid, 1-adamantyl carbamate can be cleaved by trifluoroacetic acid, allyl carbamate can be cleaved by Pd-catalyzed isomerization, and amides can be cleaved by heating in strongly acidic or basic solutions.

The compound of formula (II) described above can be prepared by contacting an aziridine compound of formula (III) 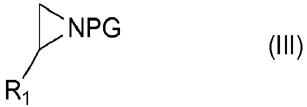 with a compound of formula (II') 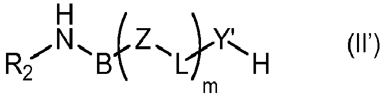 wherein R₁, R₂, PG, B, Z, L, m and Y' are as described above, in the presence of a base, optionally followed by the deprotection of the protected amine. A suitable base to carry out this reaction is selected from the group consisting of alkali hydrides, alkali carbonates, alkali hydroxides, and alkali (C₁-C₆)alkyloxides. Methods for the preparation of aziridines are known in the art.

Compounds of formula (II') are known in the art and are commercially available, or they can be prepared following standard procedures that will become obvious to the skilled in the art upon reduction to practice of the invention. Examples of compounds of formula (II') include 2-(ethylamino)ethanol, 2-(ethylamino)benzyl alcohol,

Alternatively, when P is a polymeric support, the compound of compound of formula (I) of the invention can be prepared by:
(i) reacting an aziridine compound of formula (III) 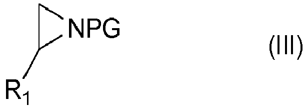 wherein R₁ is as defined above with a compound of formula (IV) 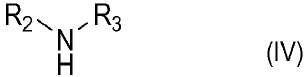 wherein R₂ is as defined in the first aspect of the invention, and R₃ is a radical of formula 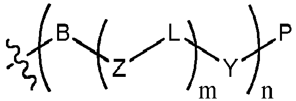 wherein P is a polymeric support, B, Z, Y, m, n and L are as defined in any embodiment of the first aspecto of the invention; followed by the deprotection of the protected amine; or, alternatively,
(ii) anchoring a compound of formula (V) 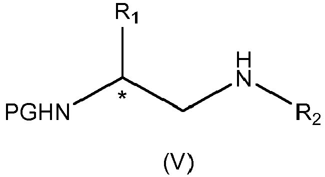 wherein PG is an amine protecting group, and R₁ and R₂ are as defined in the first aspect of the invention, onto a support by reacting the compound of formula (V) with a compound of formula R₃X', wherein R₃ is as defined above and X' is an halogen; followed by the deprotection of the protected amine.

In another particular embodiment of the second aspect of the invention, the process for the preparation of a compound of formula (I) as defined above, wherein P is a magnetic metal oxide nanoparticle, comprises the steps of:
(i) preparing a metal oxide nanoparticle by heating a mixture comprising an acetylacetonate salt of a metal selected from iron (III) and cobalt (II) and a surfactant;
(ii) contacting the metal oxide nanoparticle obtained in (i) with a capping agent of formula (O(C₁-C₃)alkyl)₃Si-(C₁-C₆)alkyl-X, wherein X is as described above; and
(iii) reacting the nanoparticle obtained in step (ii) with a compound of formula (II) as described above.

Suitable surfactants for carrying out step (i) are known in the art and will become obvious to the skilled in the art upon reduction to practice of the invention. For example, 2-dodecanediol, oleic acid and oleylamine can be used in step (i).

In a more particular embodiment of the second aspect of the invention, when in the compound of formula (I) P is a magnetic metal oxide nanoparticle, the compound of formula (O(C₁-C₃)alkyl)₃Si-(C₁-C₆)alkyl-X is one of formula (OCH₃)₃Si-C₃H₆-X.

In a more particular embodiment of the second aspect of the invention, when in the compound of formula (I) P is a magnetic metal oxide nanoparticle and Y is -O-, then X is halo and Y' is -O-. In a more particular embodiment of the second aspect of the invention, when in the compound of formula (I) P is a magnetic metal oxide nanoparticle and Y is -CONR₁₂-, then X is -NHR₁₂ and Y' is -COO-. In a more particular embodiment of the second aspect of the invention, when in the compound of formula (I) P is a magnetic metal oxide nanoparticle and Y is -SO₂NR₁₂-, then X is-NHR₁₂ and Y' is -SOO-. In a more particular embodiment of the second aspect of the invention, when in the compound of formula (I) P is a magnetic metal oxide nanoparticle and Y is -NR₁₂CO-, then X is selected from -COOH and -COCI and Y' is-NR₁₂-. In a more particular embodiment of the second aspect of the invention, when in the compound of formula (I) P is a magnetic metal oxide nanoparticle and Y is - NR₁₂SO₂-, then X is selected from -SO₃H and -SO₂Cl and Y' is -NR₁₂-. In a more particular embodiment of the second aspect of the invention, when in the compound of formula (I) P is a magnetic metal oxide nanoparticle and Y is -NR₁₂-, then X is halo and Y' is -NR₁₂-.

In another particular embodiment of the second aspect of the invention, in the compound of formula (II), when Y' is selected from the group consisting of-COO-,-NR₁₂- and -SOO-, R₁₃ is preferably PG.

In another particular embodiment of the second aspect of the invention, the process for the preparation of a compound of formula (I) as defined above, wherein P is a silicium oxide particle, comprises the steps of:
(i) preparing a silicium oxide particle;
(ii) reacting the particle obtained in step (i) with a compound of formula (II) as described above wherein Y' is -O-.

Suitable methods to carry out step (i), such as the sol-gel method, are known in the art and will become obvious to the skilled in the art upon reduction to practice of the invention.The sol-gel method usually comprises reacting a compound of formula Si(O(C₁-C₆)alkyl)₄ with water in the presence of a catalyst selected from an acid and a base.

The catalysts of the invention are useful in the preparation of W-M and H-P ketones. Thus, in a preferred embodiment of the third aspect, the compound of formula (I) is used as a catalyst in the preparation of W-M and H-P ketones.

As commented above, a fourth aspect of the invention relates to process for the preparation of a compound of formula (VI) 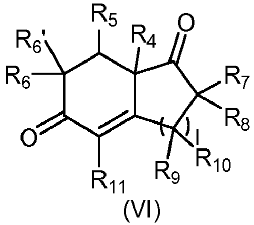 comprising contacting a compound of formula (VIIa); or, alternatively a mixture of compounds (Vllb) and (VIIc) 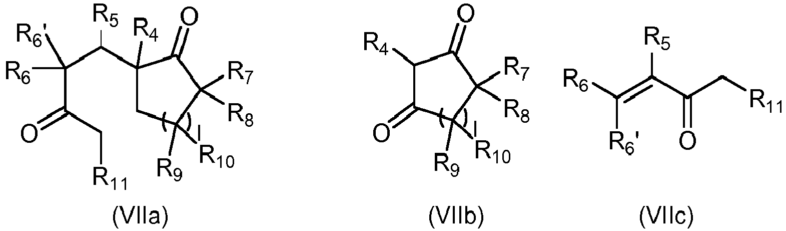 with a salt of a compound of formula (I) as defined above, in the presence of a weak acid and in the presence of a polar solvent.

In a particular embodiment of the fourth aspect of the invention, I is 1 or 2.

In a particular embodiment of the fourth aspect of the invention, optionally in combination with one or more features of the particular embodiments defined above, the molar ratio of compound (VIIc) to compound (Vllb) is from 0.8 to 1.4, particularly from 1 to 1.2; more particularly of 1.2.

In a particular embodiment of the fourth aspect of the invention, optionally in combination with one or more features of the particular embodiments defined above, R₄ is selected from the group consisting of (C₁-C₆)alkyl, (C₁-C₆)alkyl substituted with at least one radical selected from the group consisting of halogen, phenyl and (C₁-C₆)alkyloxycarbonyl, (C₂-C₆)alkenyl, (C₂-C₆)alkenyl substituted with at least one radical selected from the group consisting of halogen, (C₂-C₆)alkynyl, (C₆-C₂₀)aryl, and (C₆-C₂₀)aryl substituted with a radical selected from the group consisting of (C₁-C₆)alkyl, (C₁-C₆)alkyloxy, (C₁-C₆)alkylcarbonyloxy, (C₁-C₆)alkylcarbonyl, (C₁-C₆)alkyloxycarbonyl, and halogen. More particularly, R₄ is selected from the group consisting of (C₁-C₆)alkyl, (C₁-C₆)alkyl substituted with at least one radical selected from the group consisting of halogen, phenyl and C₁-C₆)alkyloxycarbonyl, (C₂-C₆)alkenyl, (C₂-C₆)alkenyl subistitued with bromo, (C₂-C₆)alkynyl, phenyl, and phenyl substituted with a radical selected from the group consisting of (C₁-C₆)alkyl, (C₁-C₆)alkyloxy, (C₁-C₆)alkylcarbonyloxy, (C₁-C₆)alkylcarbonyl, (C₁-C₆)alkyloxycarbonyl, and halogen. More particularly, R₄ is selected from the group consisting of (C₁-C₆)alkyl, (C₁-C₆)alkyl substituted with at least one radical selected from the group consisting of halogen and (C₁-C₆)alkyloxycarbonyl, benzyl, (C₂-C₆)alkenyl, (C₂-C₆)alkenyl subistitued with bromo, (C₂-C₆)alkynyl, and phenyl. More particularly, R₄ is selected from the groups consisting of methyl, ethyl, vinyl, allyl, benzyl, acetylenyl, phenyl, 2-ethyloxycarbonylethyl, 2-bromopropen-3-yl and 3,3'-dimethylpropen-3-yl. Even more particularly, R₄ is selected from the group consisting of methyl, allyl, and acetylenyl..

In a particular embodiment of the fourth aspect of the invention, optionally in combination with one or more features of the particular embodiments defined above, R₅, R₆, R₆', R₇ and R₈ are each independently selected from the group consisting of hydrogen, (C₁-C₆)haloalkyl and (C₁-C₆)alkyl. More particularly, R₅, R₆, R₆', R₇ and R₈ are each independently selected from the group consisting of hydrogen and (C₁-C₆)alkyl. Even more particularly, R₅, R₆, R₆', R₇ and R₈ are each hydrogen.

In a particular embodiment of the fourth aspect of the invention, optionally in combination with one or more features of the particular embodiments defined above, R₉ and R₁₀ are each hydrogen.

In another particular embodiment of the invention, optionally in combination with one or more features of the particular embodiments defined above, R₇ and R₉, together with the carbon atoms to which they are attached, form a carbocyclic ring system comprising from 5 to 7 membered carbocyclic rings, said rings being independently saturated, unsaturated or aromatic and being optionally substituted with one or more groups selected from the group consisting of (C₁-C₆)alkyl, (C₁-C₆)alkyloxy, (C₁-C₆)haloalkyl, (C₁-C₆)alkylcarbonyloxy, (C₁-C₆)alkylcarbonyloxy, nitro , cyano and halogen. In a more particular embodiment, R₇ and R₉, together with the carbon atoms to which they are attached, form a carbocyclic ring system comprising one 5 to 7 membered carbocyclic rings, said ring being independently saturated, unsaturated or aromatic and being optionally substituted with one or more groups selected from the group consisting of (C₁-C₆)alkyl, (C₁-C₆)alkyloxy, (C₁-C₆)haloalkyl, (C₁-C₆)alkylcarbonyloxy, (C₁-C₆)alkylcarbonyloxy, nitro , cyano and halogen. In a more particular embodiment, R₇ and R₉, together with the carbon atoms to which they are attached, form a phenyl ring.

In a particular embodiment of the fourth aspect of the invention, optionally in combination with one or more features of the particular embodiments defined above, R₁₁ is a radical selected from the group consisting of hydrogen and (C₁-C₆)alkyl. More particularly, R₁₁ is selected from hydrogen and methyl. Even more particulary, R₁₁ is hydrogen.

In a particular embodiment of the fourth aspect of the invention, optionally in combination with one or more features of the particular embodiments defined above, the salt of the compound of formula (I) is selected from the group consisting of a trifluoroacetate, a trifluoromethanesulfonate, a phosphate, an acetate, and a hydrochloride salt. More particularly, the salt of the compound of formula (I) is a trifluoromethanesulfonate.

The salts of the compound of formula (I) of the invention can be prepared by a) combining the compound of formula (I) as defined above and a suitable acid, such as trifluoroacetic acid, trifluoromethanesulfonic acid, phosposhoric acid, acetic acid, and hydrochloric acid, in an organic solvent b) stirring the suspension of the salt of the compound of formula (I), and c) isolating the solid salt of the compound of formula (I).

In another particular embodiment of the fourth aspect of the invention, optionally in combination with one or more features of the particular embodiments defined above, the weak acid is selected from the group consisting of acetic acid, benzoic acid, optionally substituted at any available position with a group selected from the group consisting of halogen and nitro, camphorsulfonic acid, sulfinic acid, (R)- or (S)-mandelic acid, propanoic acid, and 4-nitrophenol.

In another particular embodiment of the fourth aspect of the invention, optionally in combination with one or more features of the particular embodiments defined above, the salt of the compound of formula (I) is a trifluoromethanesulfonate and the process is carried out in the presence of 3-nitrobenzoic acid as the weak acid.

In another particular embodiment of the fourth aspect of the invention, optionally in combination with one or more features of the particular embodiments defined above, the process is carried out in a polar solvent selected from dichloromethane, dimethylformamide, tetrahydrofuran, 2-methyltertrahydrofuran and dimethylformamide:water.

In another particular embodiment of the fourth aspect of the invention, optionally in combination with one or more features of the particular embodiments defined above, the process for the preparation of W-M and H-P ketones is a continuous flow process.

Being non-soluble or partially soluble in the reaction solvent, the compounds of the invention can be incorporated into a reactor, preferably a tubular reactor or a column, through which a solution of the reagents is pumped in, thereby allowing the catalysed reaction to occur. Advantageously high turnover numbers and/or turnover frequencies are achieved which leads to a highly productive and more cost-effective, continuous and non-stopping preparation of the products in high yields and enantioselectivity and with reduced reaction times. Such column or reactor filled with the compound of the invention is also part of the invention.

Additionally, this allows for the high-yielding and selective preparation of a large number of compounds in a reduced amount of time, by carrying out the following steps in a sequential manner:
(i) inject the solution(s) of reagents into the reactor;
(ii) collect the product at the outlet of the reactor;
(iii) wash the reactor with a solvent; and
(iv) carry out steps (i), (ii) and (iii) with other reagents than the reagents used in (i).

As mentioned above, the compound of formula (I) of the invention is useful as a catalyst, particularly for the preparation of a pharmaceutically active compound, or a pharmaceutically acceptable salt thereof, comprising in its chemical structure a moiety derived from compound of formula (VI) 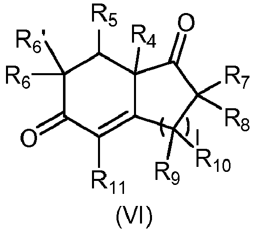 wherein R₄, R₅, R₆, R₆', R₇, R₈, R₉, R₁₀, and R₁₁ are as defined above.

For the preparation of the pharmaceutically active compounds comprising in their chemical structure the mentioned moiety, various methods can be employed depending upon the intermediates involved.

In a particular embodiment of this aspect of the invention, the pharmaceutically active compound is selected from longifolene (Corey, E. J. et al., J. Am. Chem. Soc. 1961, 83, 1251; Corey, E. J. et al., J. Am. Chem. Soc. 1964, 86, 478), seychellene (Piers, E. et al., J. Chem. Soc. D 1969, 1069*;* Piers, E. et al., J. Am. Chem. Soc. 1971, 93, 5113), paspalinine (Smith, A. B. et al., J. Am. Chem. Soc. 1990, 112, 8197; Smith, A. B. et al., J. Am. Chem. Soc. 1992, 114, 1438), (-)-glaucarubolone (Grieco, P. A. et al., J. Am. Chem. Soc. 1993, 115, 6078*),* adrenosterone *(*Dzierba, C. D. et al., J. Am. Chem. Soc. 1996, 118, 4711*),* taxol, (+)-cleomeolide, *O*-methylshikoccin (Paquette, L. A. et al., J. Am. Chem. Soc. 1997, 119, 9662), halenaquinol (Harada, N. et al., J. Am. Chem. Soc. 1988, 110, 8483), stachybotrylactam (Kende, A. S. et al., Org. Lett. 2003, 5, 1785; Deng, W. et al., J. Org. Chem. 2003, 68, 7422), penitrem D (Smith, A. B. et al., J. Am. Chem. Soc. 2003, 125, 8228), pallavicicin (Peng, X. et al., Chem. Asian J. 2006, 1, 111), beta-corymbolol (Ferraz, H. M. C. et al., Tetrahedron 2006, 62, 9232), 1-epi-pathylactone A (Chanu, A. et al., Org. Lett. 2007, 9, 1351), confertin (Heathcock, C. H. et al., J. Am.Chem. Soc. 1982, 104, 1907), pallescensin A (Smith, A. B. et al., J. Org. Chem. 1984, 49, 3685), (+)-albicanol (Shishido, K. et al., J. Chem. Soc., Chem. Commun. 1989, 1093), (+)-cleomelide, scopadulcic acid B (Ziegler, F. E. et al., J. Org. Chem. 1995, 60, 3626), digitoxigenin (Stork, G. et al., J. Am. Chem. Soc. 1996, 118, 10660), avarone (An, J. et al., J. Org. Chem. 1996, 61, 8775), bactraacchotoxinin A (Kurosu, M. et al., J. Am. Chem.Soc. 1998, 120, 6627*),* sativene (Karimi, S. et al., J. Nat. Prod. 2003, 66, 520), scabronine G (Waters, S. P. et al., J. Am. Chem. Soc. 2005, 127, 13514), xylarenal A (Diaz, S. et al., J. Org. Chem. 2005, 70, 3749), oidolactone B (Hanessian, S. et al., Org. Lett. 2009, 11, 4640), cortistatin A, and (+)-bakkenolide A (Carneiro, V. M. T. et al., J. Org. Chem. 2010, 75, 2877). Disclosures, including schemes, in the references mentioned above for the synthesis of the above listed compounds are incorporated herein by reference.

In another particular embodiment, the pharmaceutically active compound is taxol. Illustrative non-limitative examples of the preparation of taxol from the compound of formula (II) as defined above are disclosed in Danishefsky, S. J.; et al., "Total Synthesis of Baccatin III and Taxol", J. Am. Chem. Soc. 1996, vol. 118, pp. 2843-2859, particularly in pages 2845-2853 (Schemes 6-27). The mentioned relevant pages and schemes of this article are incorporated herein by reference.

In another particular embodiment, the pharmaceutically active compound is cortistatin A. An illustrative non-limitative examples of the preparation of cortistatin A from the compound of formula (II) as defined above is disclosed in Lee, H. M. et al., " Enantioselective Synthesis of (+)-Cortistatin A, a Potent and Selective Inhibitor of Endothelial Cell Proliferation", J. Am. Chem. Soc. 2008, vol. 130, pp. 16864-16866, incorporated herein by reference, and is depicted in the following schemes I and II:

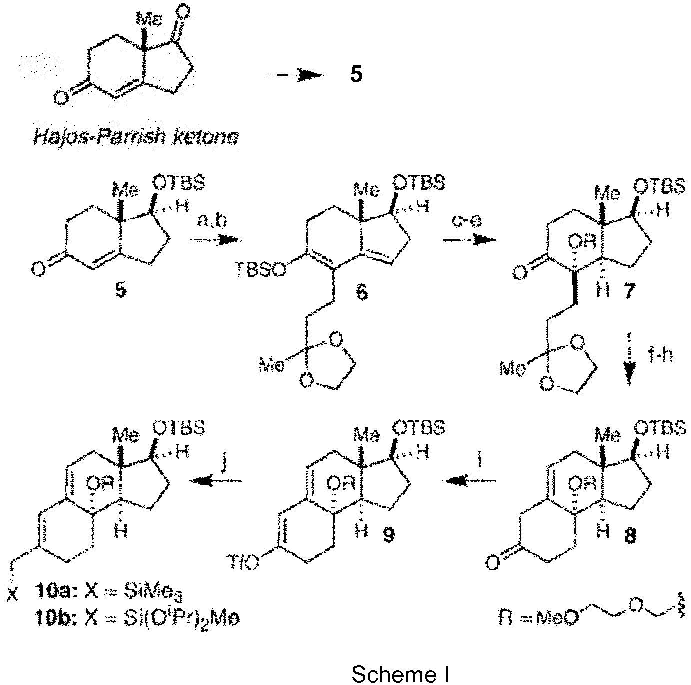

Particularly, reaction conditions in Scheme I are the following:
*^{a}*Conditions: (a) NaH (1.05 equiv), DMSO, rt, 3 h, 2-(2-bromoethyl)-2-methyl-1,3-dioxolane (1.1 equiv), rt, 12 h (63%); (b) TBSOTf (1.2 equiv), 2,6-lutidine (2 equiv), CH₂Cl₂, 0 °C, 2 h; (c) H₂ (1 atm), Pd/C (0.08 equiv), EtOAc, rt, 12 h; (d) *m*CPBA (1.1 equiv), NaHCO₃ (10 equiv), toluene, -10 °C, 30 min, HF (10 equiv), THF/toluene, 0 °C, 30 min (66% over four steps); (e) MEMCl (2 equiv), *i*PrNEt₂ (4 equiv), 1,2-dichloroethane, 80 °C, 18 h (88%); (f) PPTS (0.1 equiv), acetone/water (4:1), 60 °C, 4 h; (g) NaOMe (5 equiv), MeOH, 70 °C, 1 h (49% over two steps); (h) SOCl₂ (1.5 equiv), pyridine (3 equiv), CH₂Cl₂, -10 °C, 30 min; (i) NaHMDS (1.1 equiv), THF, -78 °C, 1 h, PhNTf₂ (1.05 equiv), 0 °C, 2 h; (j) Me₃SiCH₂MgBr (3 equiv) for **10a** or Me(O*i*Pr)₂SiCH₂MgCl (3 equiv) for **10b**, Pd(PPh₃)₄ (0.05 equiv), THF, rt, 30 min (62% over three steps).

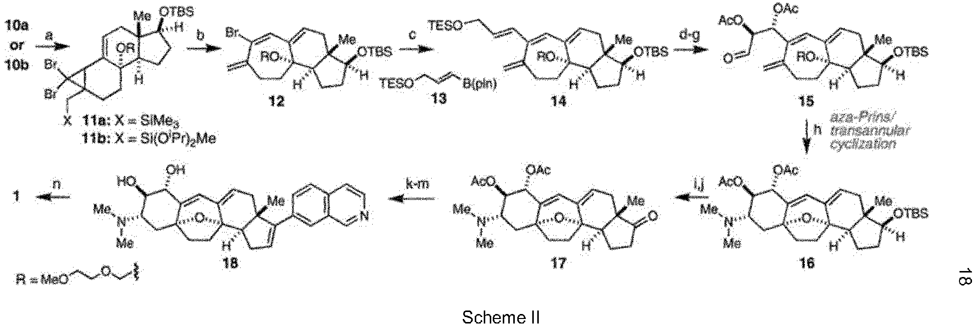

Particularly, reaction conditions in Scheme II are the following:
^{a}Conditions: (a) CHBr₃ (3 equiv), KO*t*Bu (4 equiv), hexane, 0 °C, 2 h; (b) TASF (1.2 equiv), DMF, 80°C, 30 min (66% over two steps); (c) 13 <2 equiv), Pd(PPh₃)₄ (0.04 equiv), K₂CO₃ (3 equiv), THF/water (5:1), 80 °C, 4 h (84%); (d) K₂OsO₄·2H₂O (0.02 equiv), (DHQD)₂PHAL (0.05 equiv), K₃Fe(CN)₆ (3 equiv), K₂CO₃ (3 equiv), MeSO₂NH₂ (1 equiv), *t*BuOH/water (1:1), 0 °C, 2 h; (e) Ac₂O (2.5 equiv), NEt₃ (3 equiv), DMAP (0.2 equiv), CH₂Cl₂, rt, 18 h (51% over two steps); (f) HF/pyr, THF, rt, 5 min; Dess-Martin periodinane (1.2 equiv), CH₂Cl₂, rt, 1 h; (h) Me₂NH (3 equiv), ZnBr₂ (1.5 equiv), CH₃CN, 50 °C, 40 min (65% over three steps); (i) TBAF (1.2 equiv), THF, 70 °C, 4 h (70%), (j) TPAP (0.05 equiv), NMO (1.3 equiv), CH₂Cl₂, rt, 2.5 h equiv); (k) K₂CO₃(5 equiv), MeOH, rt, 30 min (82%);(l) N₂H₄·H₂O (10 equiv), NEt₃ (10 equiv), EtOH, 80 °C, 6 h; NEt₃ (3 equiv), I₂ (1 equiv), THF, rt, 5 min; (m) Pd(PPh₃)₄ (0.5 equiv), 7-isoquinolinestannane (3 equiv), LiCl (10 equiv), CuCl (10 equiv), DMSO. 60 °C, 1 h (61% over three steps); (n) 2,4,6-triisopropylbenzenesulfonyl hydrazine (4 equiv), NEt₃ (20 equiv), THF, 60 °C, 9 h (20%).
Compound 5 can be obtained by reduction of the H-P ketone with, for example, an hydride such as lithium aluminium hydride or sodium borohydride followed by protection of the alcohol with *tert-*butyldimethylsilyl chloride.

In another particular embodiment, the pharmaceutically active compound is (+)-cleomeolide. An illustrative non-limitative example of the preparation of (+)-cleomeolide from the compound of formula (VI) wherein R₄ = CH₃, R₅ = R₆ = R₆' = R₇ = R₈ = R₉ = H, I=2 is disclosed in Paquette, L. A. et al., " Total Synthesis of the Cembranoid Diterpene Lactone (+)-Cleomeolide. Some Remarkable Conformational Features of Nine-Membered Belts Linked in 2,6-Fashion to a Methylenecyclohexane Core", J. Am. Chem. Soc. 1994, vol. 116, pp. 3367-3374, which is incorporated herein by reference. Thus, Wieland-Miescher ketone, represented by the following formula 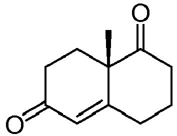 was selectively dithioketalized to obtain compound 9 and the steps outlined in the schemes III to V below were carried out:

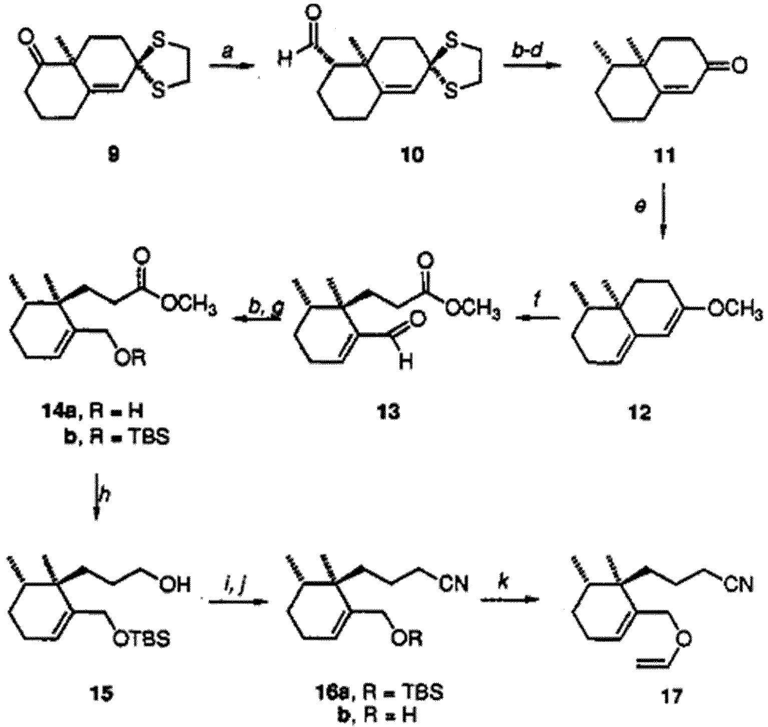

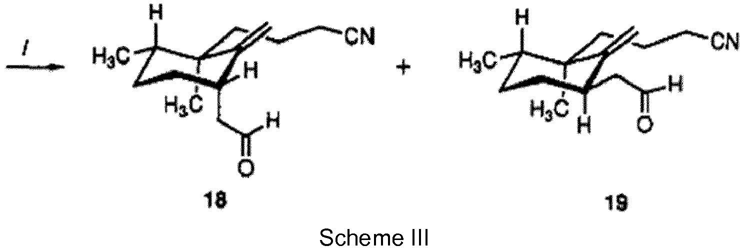

Particularly, reaction conditions in Scheme III are the following:
*^{a}* Ph₃P⁺CH₂OCH₃ Cl⁻, KN(SiMe₃)₂, THF, 0 °C → rt; 4 N HCl. *^{b}* NaBH₄, MeOH. *^{c}* CH₃SO₂Cl, Et₃N, CH₂Cl₂, 0 °C; LiBHEt₃, THF, rt. *^{d}*Tl(NO₃)₃·3H₂O, MeOH-THF. *^{e}*HC(OCH₃)₃, (TsOH), MeOH, DMF.*^{f}*MCPBA, benzene-hexanes, 0 °C → rt; silica gel. *^{g}* TBSCl, imid, DMF. *^{h}* LiAlH₄, THF, 0 °C. *ⁱ* CH₃SO₂Cl, Et₃N, CH₂Cl₂; KCN, 18-crown-6. DMF. *^{j}*Py·HF, CH₃CN, H₂O. *^{k}*CH₂-CHOC₂H₅, Hg(O-COCF₃)₂, Et₃N. *^{l}*Xylene, 200 °C, sealed tube.

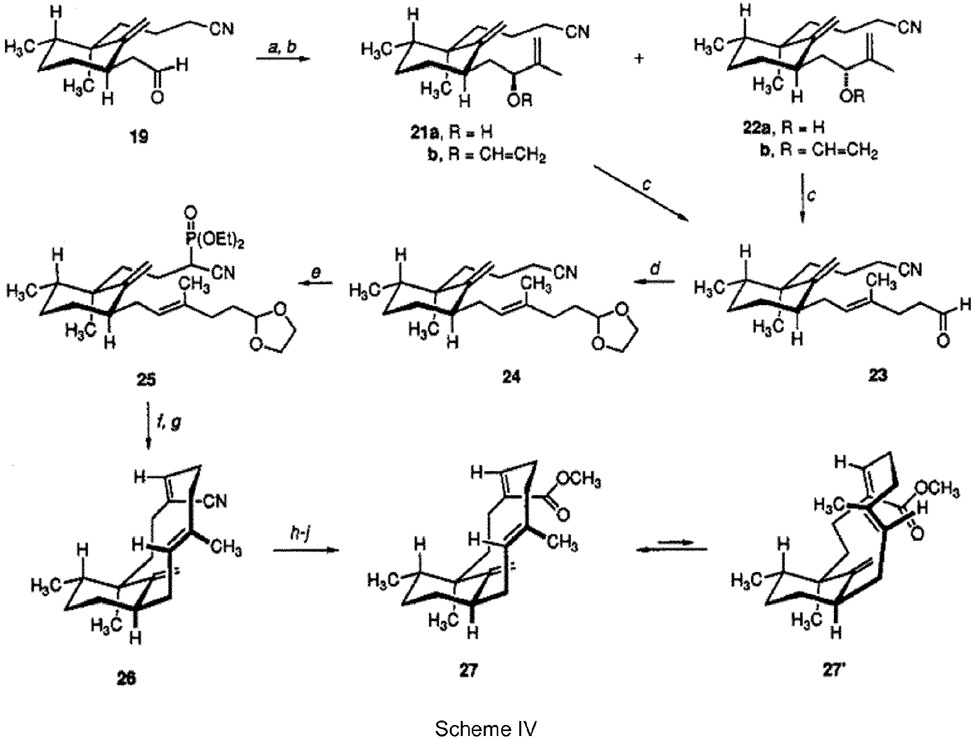

Particularly, reaction conditions in Scheme IV are the following:
*^{a}* CH₂=C(MgBr)CH₃, THF, -78 °C; H₂O. *^{b}* CH₂=CHOC₂H₅, (CH₃CH₂)₃N, Hg(OCOCF₃)₂. *^{c}* Benzene, 170 °C, sealed tube. *^{d}* (Me₃SiOCH₂)₂, TMSOTf, CH₂Cl₂, -78°C. *^{e}* LDA, THF, -78 °C; ClP(O)(OC₂H₅)₂. *^{f}*TsOH, H₂O, acetone. *^{g}* K₂CO₃, 18-crown-6, toluene, 20 °C. *^{h}*Dibal-H, toluene, ether, -78 °C -> 0 °C; silica gel. *ⁱ* NaClO₂, NaH₂PO₄, 2-methyl-2-butene, H₂O, *t*-BuOH. *^{j}* CH₂N₂, ether.

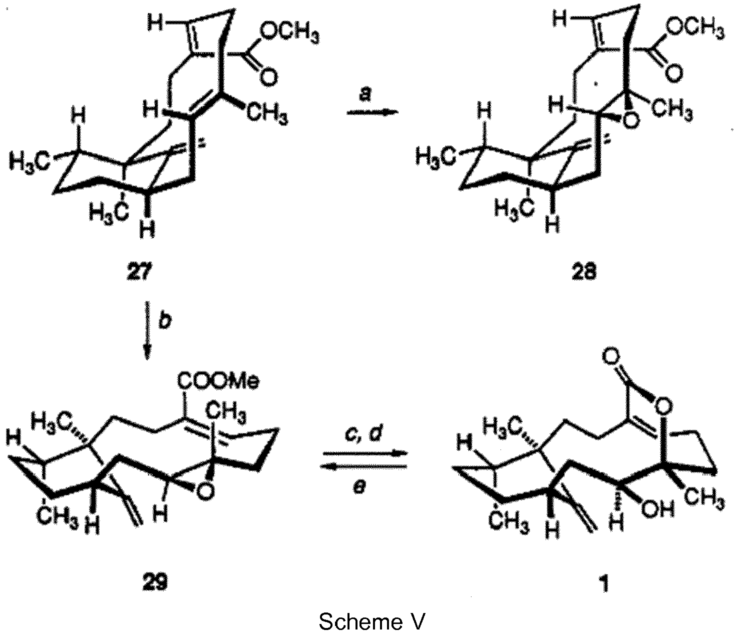

Particularly, reaction conditions in Scheme V are the following:
*^{a}* MCPBA, NaHCO₃, CH₂Cl₂. *^{b}* Ag₂O, H₂O, dioxane. *^{c}* 3.5% KOH in MeOH, reflux. *^{d}* 5% HCl, THF. *^{e}*3.5% KOH in MeOH, Δ; H₃O⁺; CH₂N₂.

Throughout the description and claims the word "comprise" and variations of the are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

### EXAMPLES

### General information

Unless otherwise stated, all commercial reagents were used as received and all reactions were carried out directly under air, unless stated otherwise. Merrifield resin (1 % PS-DVB, f = 1.55 mmol of Cl per gram of resin) was purchased from Novabiochem. The extent of the supporting process and the functionalization of the final resin were determined by elemental analysis. Flash chromatography was carried out using 60 mesh silica gel and dry-packed columns. ¹H-NMR spectra were recorded at room temperature using Bruker Advance 300, 400 and 500 Ultrashield spectrometers operating at 300, 400 and 500 MHz respectively. ¹³C-NMR spectra were recorded at room temperature using Bruker Advance 400 Ultrashield spectrometer operating at 100 MHz. All NMR samples were recorded in CDCl₃ at room temperature. Chemical shifts for protons are quoted in parts per million (ppm) downfield from tetramethylsilane and were referenced to residual proton resonances of the NMR solvent. Specific rotation was determined by using a Jasco P-1030 polarimeter equipped with a sodium lamp, and a photomultiplier tube detector with a 589 nm filter, in a polarimetry cell of 100 mm length. Concentration in g/100 ml and solvent used are indicated in brackets. High resolution mass spectrometry analyses were performed in a Waters LCD PremierTM instrument operating in ESI (ElectroSpray Ionization) mode. Elemental analyses were performed by MEDAC Ltd. (Surrey, UK) on a LECO CHNS 932 micro-analyzer. High performance liquid chromatography (HPLC) was performed on Agilent Technologies chromatograph (Serie1200), using Daicel Chiralpak IC or AD-H columns and guard column. The continuous flow experiments were carried out using HPLC pumps with pressurized input and backpressure regulator

### Example 1: Preparation of a polymer supported catalyst

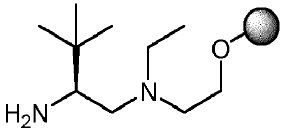

wherein 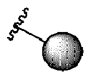 is a Merrifield resin.

### Step 1: Preparation of (S)-tert leucinol

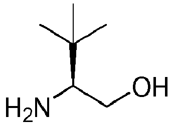

A suspension of *L-tert* Leucine (3.0 g, 22.9 mmol) in dry THF (60 ml) was cooled down to 0 °C. Sodium borohydride (2.1 g, 54.9 mmol) was added in one portion. A solution of iodine (5.8 g, 22.9 mmol) in dry THF (16 ml) was added to the suspension over 30 min. After addition, the bath is removed and the reaction was warmed to reflux for 16 h. After, the reaction, methanol was added (15 mL). The solution was transferred to one-necked flask and washed with methanol (40 mL) and concentrated. The concentrate was dissolved with KOH (45 ml, 22.9 mmol) and stirred for 5h at room temperature. The aqueous layer was extracted with DCM (6 x 40 mL), dried over anhydrous MgSO₄, filtered and concentrated at reduced pressure to give (*S*)-*tert*-leucinol (2.4 g, 89% yield) as a colorless solid which was used for the next step without any further purification.

¹H-NMR (400 MHz, CDCl₃): δ = 0.89 (s, 9 H, *tert*-Bu), 1.18-2.10 (m, 3 H), 2.49 (dd, *J* = 10.2 and 3.9 Hz, 1H), 3.19 (t, *J* = 10.2 Hz, 1H), 3.70 (dd, *J* = 10.2 and 3.9 Hz, 1 H.

### Step 2: (S)-N-Boc tert-leucinol

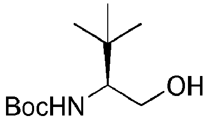

A solution of L-*tert*-leucinol as obtained in step 1 (2.39 g, 20.4 mmol) and Et₃N (2.8 mL, 20.4 mmo) in dry THF (70 ml) was cooled down to 0 °C. (Boc)₂O (4.4 g, 20.4 mmol) was added and the reaction was warmed to room temperature and stirred for 2 h. NH₄Cl saturated (30 mL) was added and extracted with AcOEt (2 x 50 mL). The combined organic layer was washed with water (2 x 30 mL) and brine (30 mL) and was dried over anhydrous MgSO₄, filtered and concentrated at reduced pressure to give (S)-N-Boc *tert*-leucinol (4.4 g, 99% yield) as a solid which was used for the next step without any further purification.

¹H-NMR (300 MHz, CDCl₃): δ = 0.94 (s, 9 H, *tert*-Bu), 1.45 (s, 9 H, *tert*-Bu), 2.16 (br s, 1H, OH), 3.45-3.52 (m, 2 H, CH₂OH), 3.81-3.85 (m, 1 H, CH), 4.62 (br s, 1 H, NH).

### Step 3: (S)-2-(tert-butoxycarbonylamino)-3,3-dimethylbutyl methanesulfonate

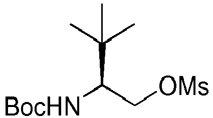

A solution of (S)-N-Boc *tert*-leucinol as obtained in step 2 (2.3 g, 10.4 mmol) and Et₃N (1.6 mL, 11.5 mmol) in dry CH₂Cl₂ (40 mL) was cooled down to 0 °C. A solution of methanesulfonylchloride (MsCl) (0.84 mL, 10.9 mmol) was added dropwise over 30 min. The reaction mixture was allowed to warm to room temperature and stirred for 1 h. NaHCO₃ saturated (20 mL) was added and extracted with CH₂Cl₂ (3 x 50 mL). The combined organic layers were dried over anhydrous MgSO₄, filtered and concentrated at reduced pressure to give a colorless oil which was submitted to flash silica gel column chromatography (mixtures cyclohexane / AcOEt 3:1) to give (S)-2-(*tert*-butoxycarbonylamino)-3,3-dimethylbutyl methanesulfonate (2.7 g, 87% yield) as a white solid.

¹H-NMR (400 MHz, CDCl₃): δ = 0.96 (s, 9 H, *tert*-Bu), 1.43 (s, 9 H, *tert*-Bu), 3.02 (s, 3 H, CH₃), [3.64-3.75 (m), 3.68-3.73 (m), 1 H], [4.04-4.12 (m), 4.20-4.15 (m), 1 H], 4.37 (dd, *J* = 10.4 and 3.6 Hz, 1 H), [4.60-4.73 (m), 4.83-4.97 (m), 1 H, NH].

### Step 4: (S)-tert-butyl 2-(tert-butyl)aziridine-1-carboxylate

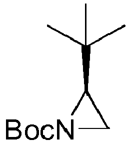

Sodium hydride (61 mg, 1.52 mmol) was added to a cool solution of (*S*)-2-(*tert-*butoxycarbonylamino)-3,3-dimethylbutyl methanesulfonate as obtained in step 3 (300 mg, 1.01 mmol) in dry THF (20 mL). The mixture was stirred for 1 h at 0 °C, then the mixture was allowed to warm to room temperature and stirred for 16 h. Brine (10 mL) was added and extracted with Et₂O (3 x 30 mL). The combined organic layers were dried over anhydrous MgSO₄, filtered and concentrated at reduced pressure to give a yellow oil which was submitted to flash silica gel column chromatography (Et₂O 100%) to give the aziridine of the title (163 mg, 81% yield) as a yellow oil.

¹H-NMR (400 MHz, CDCl₃): δ = 0.92 (s, 9 H, *tert*-Bu), 1.45 (s, 9 H, *tert*-Bu), 2.01 (d, *J = 3.8 Hz,* 1 H, CH₂), 2.13 (d, *J* = 6.4 Hz, 1 H, CH₂), 2.17 (dd, *J* = 6.4 and 3.8 Hz, 1 H, CH).

### Step 5: Formation of (S)-tert-butyl (1-(ethyl(2-hydroxyethyl)amino)-3,3-dimethylbutan-2-yl)carbamate

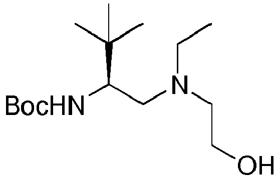

2-(Ethylamino)ethanol (2.0 mL, 21.4 mmol) was added to a solution of the aziridine obtained in step 4 (0.95 g, 4.8 mmol) in dry CH₃CN (5.5 mL) at room temperature and the mixture was allowed to heat to 80 °C and stirred for 2 days. The crude was submitted to flash silica gel column chromatography (AcOEt 100%) to give the product of the title (0.94 g, 68% yield) as a white solid.

¹H-NMR (500 MHz, CDCl₃): δ = 0.89 (s, 9H, *tert*-Bu), 0.98 (t, J= 7.1 Hz, 3H, CH₃), 1.42 (s, 9H, tert-Bu), 2.21 (dd, *J* = 13.5 and 11.0 Hz, 1 H, 1CH₂), 2.43-2.52 (m, 2H, 2CH₂ and 3CH₂), 2.58-2.72 (m, 3H, 1CH₂, 2CH₂ and 3CH₂), 3.35 (br s, 1 H, OH), 3.43-3.56 (m, 3H, CH and 4CH₂), 4.35 (d, *J =* 10.4 Hz, 1 H, NH).
[α]_{D}²⁴ = +42.8 (c 1.05, CHCl₃).
HRMS (ESI+) calcd for [C₁₅H₃₂N₂O₃+H]⁺: 289.2486. Found: 289.2491.

### Step 6: (S)-2-((2-amino-3,3-dimethylbutyl)(ethyl)amino)ethanol

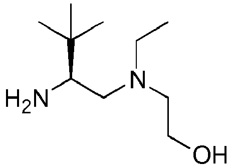

A mixture of solution of *(S)-tert-butyl* (1-(ethyl(2-hydroxyethyl)amino)-3,3-dimethylbutan-2-yl)carbamate as obtained in step 5 (2.54 mg, 8.8 mmol) in IPA/HCl (80 mL) was stirred at room temperature for 16 h. The solvent was evaporated under reduced pressure, water (40 mL) was added and the mixture was made alkaline with NaOH 1 N. The aqueous layer was extracted with AcOEt (3 x 200 mL), the combined organic layers were dried over anhydrous MgSO₄, filtered and solvent was evaporated under reduced pressure to give (*S*)-2-((2-amino-3,3-dimethylbutyl)(ethyl)amino)ethanol (1.57 g, 95% yield) as a yellow oil which was used for the next step without any further purification.

¹H-NMR (500 MHz, CDCl₃): δ = 0.88 (s, 9H, *tert*-Bu), 1.02 (t, *J* = 7.2 Hz, 3H, CH₃), 2.20 (dd, *J* = 13.3 and 11.1 Hz, 1H, 1CH₂), 2.36-2.50 (m, 4H, 3CH₂, OH and NH₂), 2.51-2.57 (m, 3H, CH, 1CH₂ and 2CH₂), 2.60-2.66 (m, 1H, 2CH₂), 2.67-2.73 (m, 1 H, 3CH₂), 3.57-3.50 (m, 1 H, 4CH₂), 3.58-3.63 (m, 1 H, 4CH₂). [α]_{D}²⁴ = +114.3 (c 1.02, CHCl₃).
HRMS (ESI+) calcd for [C₁₀H₂₄N₂O+H]⁺: 189.1961. Found: 189.1966.

### Step 7: (S)-2-((2-amino-3,3-dimethylbutyl)(ethyl)amino)ethano-yl-methoxymethyl polystyrene cross-linked with divinylbenzene at 1%

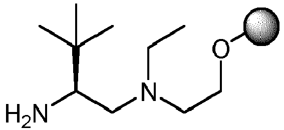

wherein 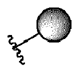 is a Merrifield resin.

A solution of (*S*)-2-((2-amino-3,3-dimethylbutyl)(ethyl)amino)ethanol as obtained in step 6 (1.55 g, 8.23 mmol) in dry DMF (15 mL) was added to a suspension of sodium hydride (200 mg, 8.23 mmol) in dry DMF (20 mL) at 0 °C under inert atmosphere and the resulting mixture was stirred for 1 h at this temperature. Then, the reaction mixture was added via canula to a suspension of a Merrifield resin functionalized with chloride groups (2.6 g, 4.11 mmol, *f* = 1.55 mmol·g⁻¹), swollen in DMF (40 mL). The reaction mixture was shaken at room temperature for 2 days. The resin was filtered off and successively washed with H₂O (250 mL), H₂O/MeOH (1:1, 250 mL), MeOH (250 mL), MeOH/THF (1:1, 250 mL), THF (250 mL) and CH₂Cl₂ (250 mL). The obtained solid (therein below PS-catalyst) was dried in vacuo at 40 °C for 24 h.
N Elemental analysis (%) = N, 2.77
*f* = 0.99 mmol·g⁻¹ (80% of functionalization, *f*ₘₐₓ = 1.25 mmol·g⁻¹).

### Example 2: Preparation of dione compounds of formula (VI') in batch conditions I = 1 or 2.

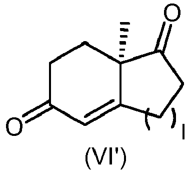

### Example 2(i) - (R)-8a-methyl-3,4,8,8a-tetrahydronaphthalene-1,6(2H,7H)-dione

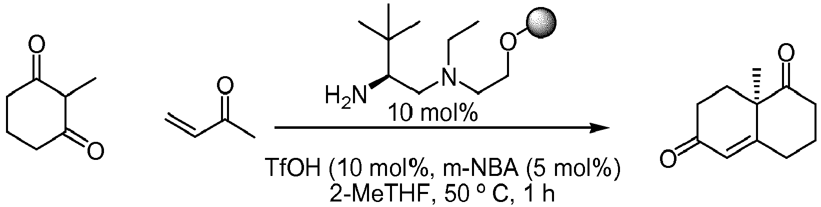

Trifluoromethane sulfonic acid (TfOH) (270 µL, 0.027 mmol, solution 0.1 M in CH₂Cl₂) was added to a mixture of PS-catalyst of Example 1 (27 mg, 0.027 mmol, f = 0.99 mmol·g⁻¹) in CH₂Cl₂ (0.3 mL) in a 1 mL-vial at room temperature and the mixture was stirred at this temperature for 20 min. After that, the solvent was evaporated, a mixture of 2-methylcyclohexane-1,3-dione (34 mg, 0.27 mmol) and *m*-NO₂C₆H₄CO₂H (2.2 mg, 0.013 mmol) was added as solid and then a solution of methyl vinyl ketone (27 µL, 0.32 mmol) in 2-MeTHF (0.27 mL) was added. The temperature was increased to 50 °C and stirred for 1 h. The resin was filtered off, washed with 2-MeTHF (3 x 1 mL) and the solvent was evaporated under reduced pressure to give an orange oil which was submitted to flash silica gel column chromatography (mixture cyclohexane / AcOEt 2:1) to give (R)-8a-methyl-3,4,8,8a-tetrahydronaphthalene-1,6(2H,7H)-dione (41.4 mg, 86% yield) as a colorless oil.

¹H-NMR (500 MHz, CDCl₃): δ = 1.44 (s, 3H, CH₃), 1.64-1.76 (m, 1H), 2.75-2.81 (m, 1H, 3CH₂), 2.10-2.18 (m, 3H), 2.42-2.51 (s, 4H), 2.66-2.76 (m, 2 H), 5.84 (d, *J =* 2.0 Hz, 1 H). ¹³C-NMR (100 MHz, CDCl₃): δ = 22.9 (t, CH₂), 23.3 (q, CH₃), 29.7 (t, CH₂), 31.7 (t, CH₂), 33.6 (t, CH₂), 37.7 (t, CH₂), 50.6 (s, C), 125.8 (d, CH), 165.8 (s, C), 198.3 (s, CO), 211.0 (s, CO).
HPLC (Daicel Chiralpak IC, hexane/*i*-PrOH = 80:20), flow rate 1.0 mL/min, λ = 254 nm): t_{R} (R) = 28.0 min (major) and t_{R} (S) = 31.5 min (minor) (ee = 91%).

### Example 2(ii) - (R)-8a-methyl-3,4,8,8a-tetrahydronaphthalene-1,6(2H,7H)-dione

The same process as in Example 2(i) was carried out but with 2 mol% or the PS-catalyst, 2 mol% of TfOH, and 1 mol% of m-NBA, and at a temperature of 60 °C. A higher than expected yield (93%) was obtained while obtaining a similar enantioselectivity (88% ee) in a significantly reduced period of time (12 h versus 3 days reported in C. Xu et al., "A practical protocol for asymmetric synthesis of Wieland-Miescher and Hajos-Parrish ketones catalyzed by a simple chiral primary amine", Synthesis 2013, Vol. 45, pp. 1939-1945). When the reaction was performed with less catalyst loading (2 mol% of heterogenized catalyst, 2 mol% of TfOH and 1 mol% of m-nitrobenzoic acid) at 60°C compared with the process carried out with the same catalyst but without being immobilized (see Xu, C. *et al.* above) a significant reduction of the reaction time was achieved (12 hour versus 3 days) while keeping yield and enantiomeric excess.

### Example 2(iii) - (R)-7a-methyl-2,3,7,7a-tetrahydro-1H-indene-1,5(6H)-dione

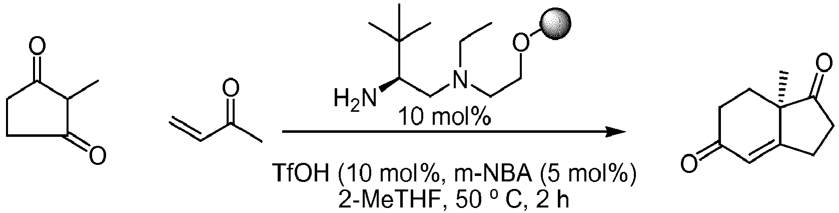

Trifluoromethane sulfonic acid (TfOH) (270 µL, 0.027 mmol, solution 0.1 M in CH₂Cl₂) was added to a mixture of PS-catalyst of Example 1 (27 mg, 0.027 mmol, f = 0.99 mmol·g⁻¹) in CH₂Cl₂ (0.3 mL) in a 1 mL-vial at room temperature and the mixture was stirred at this temperature for 20 min. After that, the solvent was evaporated, a mixture of 2-methylcyclopentane-1,3-dione (30.3 mg, 0.27 mmol) and m-NO₂C₆H₄CO₂H (2.2 mg, 0.013 mmol) was added as solid and then a solution of methyl vinyl ketone (27 µL, 0.32 mmol) in 2-MeTHF (0.27 mL) was added. The temperature was increased to 50 °C and stirred for 2 h. The resin was filtered off, washed with 2-MeTHF (3 x 1 mL) and the solvent was evaporated under reduced pressure to give an orange oil which was submitted to flash silica gel column chromatography (mixture cyclohexane / AcOEt 2:1) to give (R)-7a-methyl-2,3,7,7a-tetrahydro-1*H*-indene-1,5(6*H*)-dione (34.9 mg, 79% yield) as a white solid. (*R*)-7a-methyl-2,3,7,7a-tetrahydro-1*H*-indene-1,5(6*H*)-dione was characterized by comparing its ¹H- and ¹³C-NMR spectra to the previously reported data described in the literature.

¹H-NMR (400 MHz, CDCl₃): δ = 1.30 (s, 3H, CH₃), 1.83 (td, *J* = 13.5 and 5.6 Hz, 1 H), 2.09 (ddd, *J* = 13.5, 5.1 and 2.3 Hz, 1 H), 2.37-2.56 (m, 3H), 2.69-2.79 (m, 2H), 2.90-2.96 (m, 1 H), 5.95 (d, *J* = 2.4 Hz, 1 H). ¹³C-NMR (100 MHz, CDCl₃): δ = 20.5 (q, CH₃), 26.8 (t, CH₂), 29.1 (t, CH₂), 32.8 (t, CH₂), 35.8 (t, CH₂), 48.6 (s, C), 123.8 (d, CH), 169.6 (s, C), 198.0 (s, CO), 216.4 (s, CO).
HPLC (Daicel Chiralpak AD-H, hexane/*i*-PrOH = 95:5), flow rate 1.0 mL/min, λ = 254 nm): t_{R} (S) = 13.3 min (minor) and t_{R} (R) = 13.9 min (major) (ee = 80%).

### Example 3 - Recycling experiment

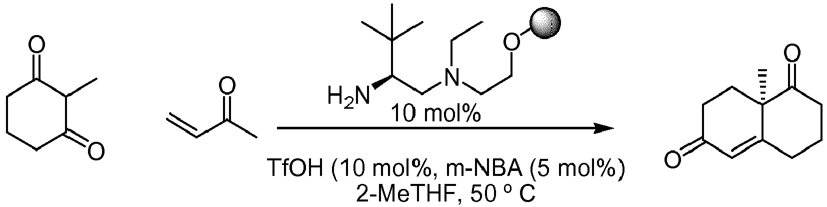

TfOH (270 µL, 0.027 mmol, solution 0.1 M in CH₂Cl₂) was added to a mixture of PS-catalyst (27 mg, 0.027 mmol, f = 0.99 mmol·g⁻¹) in CH₂Cl₂ (0.3 mL) in a 1 ml-vial at room temperature and the mixture was stirred at this temperature for 20 min. After that, the solvent was evaporated, a mixture of 2-methylcyclohexane-1,3-dione (34 mg, 0.27 mmol) and *m*-NO₂C₆H₄CO₂H (2.2 mg, 0.013 mmol) was added as solid and then a solution of methyl vinyl ketone (27 µL, 0.32 mmol) in 2-MeTHF (0.27 mL) was added. The temperature was increased to 50 °C and stirred for 1 h. After that time, the resin was filtered off and the recovered resin was directly used for the next cycle. Thus, a mixture of 2-methylcyclohexane-1,3-dione (34 mg, 0.27 mmol) and m-NO₂C₆H₄CO₂H (2.2 mg, 0.013 mol) was added as solid and then a solution of methyl vinyl ketone (27 µL, 0.32 mmol) in 2-MeTHF (0.27 mL) was added. The temperature was increased to 50 °C and stirred for 1 h. After three cycles, the Robinson annulation product (105.7 mg, 0.593 mmol, 73% yield, 91% ee) was obtained. Conversion and molar ratio of formed products were determined by performing ¹H NMR spectroscopy on the crude samples after removal of the resin. The Robinson annulation products were purified by column chromatography. The enantiomeric excess was determined by HPLC on a chiral stationary phase after purification.

| Cycle | Time (h) | Conv (%) diketone^{a} | ee (%)^{b} |
|---|---|---|---|
| 1 | 1 | >99 | 91 |
| 2 | 1 | 95 | 91 |
| 3 | 1 | 93 | 92 |

| | | | |
|---|---|---|---|
| ^{a}Determined by performing ¹H NMR spectroscopy on the crude samples. ^{b}Determined by HPLC on a chiral stationary phase after purification. | | | |

It can be observed than after three cycles good yields were obtained while keeping excellent enantiomeric excesses with reaction times of 1 h. Thus, the supported catalyst was proved to be suitable for continuous flow processes.

### REFERENCES CITED IN THE APPLICATION

- P. X. Zhou et al. J. Org. Chem. 2012, 7vol. 7, pp. 2526-2530.
- L. Zhang et al. "Green Techniques for Organic Synthesis and Medicinal Chemistry", Chapter 5, "Supported Asymmetric Organocatalysis", Edited by Wei Zhang and Berkeley W. Cue, John Wiley & Sons, Ltd., First Edition, 2012, pp. 99-106.
- "Greene's Protective Groups in Organic Chemistry", Edited by Theodora W. Greene and Peter G. M. Wuts, John Wiley & Sons, Ltd., Third Edition, 1999, pp. 495-653.
- Corey, E. J. et al., J. Am. Chem. Soc. 1961, 83, 1251
- Corey, E. J. et al., J. Am. Chem. Soc. 1964, 86, 478
- Piers, E. et al., J. Chem. Soc. D 1969, 1069
- Piers, E. et al., J. Am. Chem. Soc. 1971, 93, 5113
- Smith, A. B. et al., J. Am. Chem. Soc. 1990, 112, 8197
- Smith, A. B. et al., J. Am. Chem. Soc. 1992, 114, 1438
- Grieco, P. A. et al., J. Am. Chem. Soc. 1993, 115, 6078
- Dzierba, C. D. et al., J. Am. Chem. Soc. 1996, 118, 4711
- Paquette, L. A. et al., J. Am. Chem. Soc. 1997, 119, 9662
- Harada, N. et al., J. Am. Chem. Soc. 1988, 110, 8483
- Kende, A. S. et al., Org. Lett. 2003, 5, 1785
- Deng, W. et al., J. Org. Chem. 2003, 68, 7422
- Smith, A. B. et al., J. Am. Chem. Soc. 2003, 125, 8228
- Peng, X. et al., Chem. Asian J. 2006, 1, 111
- Ferraz, H. M. C. et al., Tetrahedron 2006, 62, 9232
- Chanu, A. et al., Org. Lett. 2007, 9, 1351
- Heathcock, C. H. et al., J. Am.Chem. Soc. 1982, 104, 1907
- Smith, A. B. et al., J. Org. Chem. 1984, 49, 3685
- Shishido, K. et al., J. Chem. Soc., Chem. Commun. 1989, 1093
- Ziegler, F. E. et al., J. Org. Chem. 1995, 60, 3626
- Stork, G. et al., J. Am. Chem. Soc. 1996, 118, 10660
- An, J. et al., J. Org. Chem. 1996, 61, 8775
- Kurosu, M. et al., J. Am. Chem.Soc. 1998, 120, 6627
- Karimi, S. et al., J. Nat. Prod. 2003, 66, 520
- Waters, S. P. et al., J. Am. Chem. Soc. 2005, 127, 13514
- Diaz, S. et al., J. Org. Chem. 2005, 70, 3749
- Hanessian, S. et al., Org. Lett. 2009, 11, 4640
- Carneiro, V. M. T. et al., J. Org. Chem. 2010, 75, 2877
- Danishefsky, S. J.; et al., "Total Synthesis of Baccatin III and Taxol", J. Am. Chem. Soc. 1996, vol. 118, pp. 2843-2859.
- Lee, H. M. et al., J. Am. Chem. Soc. 2008, vol. 130, pp. 16864-16866.
- Paquette, L. A. et al., J. Am. Chem. Soc. 1994, vol. 116, pp. 3367-3374
- C. Xu et al., Synthesis 2013, Vol. 45, pp. 1939-1945

## Claims

1. A chiral compound of formula (I) or a salt thereof
P-(A)ₙ (I)
wherein:
n is an integer from 1 to 100.000;
A is a radical of formula (I') 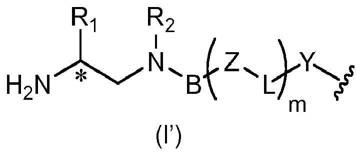 wherein:
R₁ is a radical selected from the group consisting of iso-propyl, tert-butyl, mesitilyl, 2,6-dimethylphenyl, 2-tolyl, adamantyl, and (C₃-C₆)cycloalkyl optionally substituted with a radical selected from the group consisting of (C₁-C₆)alkyl, halogen, and (C₁-C₆)haloalkyl;
R₂ is a (C₁-C₆)alkyl radical;
B and L are each a biradical independently selected from the group consisting of (C₁-C₆)alkylene, phenylene, benzylene, -CH₂-C₆H₄-CH₂-, and biphenylene;
Y and Z are each a biradical independently selected from the group consisting of -O-, -S-, -CONR₁₂-, -SO₂NR₁₂-, -NR₁₂CO-, NR₁₂SO₂-, and -NR₁₂-, wherein R₁₂ is selected from the group consisting of hydrogen, (C₁-C₆)alkyl, phenyl, and benzyl;
m is an integer of 0 or 1; and
P is selected from a polymeric support, a magnetic metal oxide nanoparticle and a silicium oxide particle;
provided that when P is a silicium oxide particle, Y is O.

2. The compound according to claim 1, wherein P is a polymeric support and Y is a biradical independently selected from the group consisting of -O-, -S-, -CONR₁₂-,-SO₂NR₁₂-, -NR₁₂CO-, and NR₁₂SO₂-, wherein R₁₂ is selected from the group consisting of hydrogen, (C₁-C₆)alkyl, phenyl, and benzyl.

3. The compound according to any one of claims 1 or 2, wherein B is -CH₂-CH₂-, Y is -O-, and m is 0.

4. The compound according to one of claims 1 to 3, wherein the polymeric support is a cross-linked polystyrene-divinylbenzene polymer.

5. The compound according to any one of claims 1 to 4, which is in form of a salt.

6. The compound according to claim 5 wherein the salt is selected from the group consisting of a trifluoroacetate, a trifluoromethanesulfonate, a phosphate, an acetate, and a hydrochloride salt.

7. A process for the preparation of the compound according to any of claims 1 to 6, which comprises the steps of:
(1) when P is a polymeric support:
reacting a compound of formula (II) 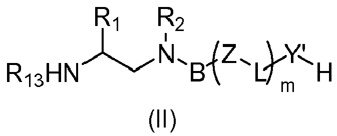 with a compound of formula P-(X)ₙ;
wherein X is selected from the group consisting of halo, SO₃H, SO₂Cl, CO₂H, COCI, and NHR₁₂, wherein R₁₂ is selected from the group consisting of hydrogen, (C₁-C₆)alkyl, phenyl, and benzyl;
Y' is a biradical selected from the group consisting of -O-, -S-, -COO-, -SO₂-, and NR₁₂, wherein R₁₂ is as defined above;
R₁, R₂, B, L, Z, n and m are as defined in any of claims 1 to 6; and
R₁₃ is selected from the group consisting of H and PG, wherein PG is selected from the group consisting of *t*-butyl carbamate (BOC), trityl, tosyl, mesyl, benzyl carbamate (Cbz), 2,3-dichlorobenzyl carbamate, 2-(biphenylyl)isopropyl carbamate, and 9-fluorenylmethyl carbamate (Fmoc), isonicotinyl carbamate, 1-adamantyl carbamate, allyl carbamate, *N*-acetyl, *N*-benzoyl; *N*-alkyl and *N*-aryl; *N*-benzyl;, *N*-Si, and *N-*benzenesulfenyl; and, followed by the deprotection of the protected amine when R₁₃ is PG; or , alternatively,
(2) when P is a metal oxide nanoparticle,
(i) preparing a metal oxide nanoparticle by heating a mixture comprising an acetylacetonate salt of a metal selected from iron (III) and cobalt (II) and a surfactant;
(ii) contacting the metal oxide nanoparticle obtained in (i) with a capping agent of formula (O(C₁-C₃)alkyl)₃Si-(C₁-C₆)alkyl-X, wherein X is as described above; and
(iii) reacting the nanoparticle obtained in step (ii) with a compound of formula (II) as described above; followed by the deprotection of the protected amine when R₁₃ is PG; or, alternatively,
(3) when P is a silicium oxide particle,
(i) preparing a silicium oxide particle;
(ii) reacting the particle obtained in step (i) with a compound of formula (II) as described above wherein Y' is -O-, followed by the deprotection of the protected amine when R₁₃ is PG.

8. Use of a compound as defined in any one of claims 1 to 6 as a catalyst.

9. A process for the preparation of a compound of formula (VI) 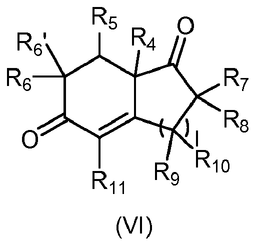 comprising contacting a compound of formula (VIIa); or, alternatively a mixture of compounds (Vllb) and (VIIc) 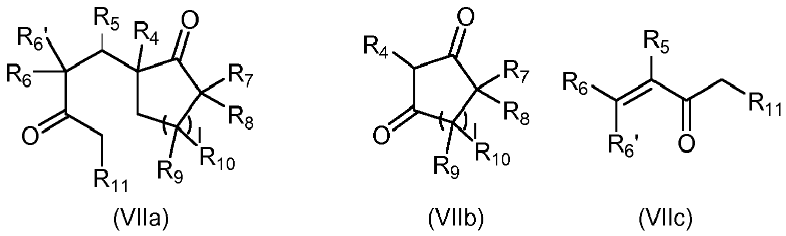 with a salt of a compound of formula (I) as defined in any of the claims 1 to 4, in the presence of a weak acid and in the presence of a polar solvent;
wherein:
I is an integer from 1 to 3;
R₄ is a radical selected from the group consisting of (C₁-C₆)alkyl, (C₁-C₆)alkyl substituted with at least one radical selected from the group consisting of halogen, (C₁-C₆)alkyloxycarbonyl, (C₁-C₆)alkylcarbonyloxy, phenyl, nitrile, and nitro, (C₂-C₆)alkenyl, (C₂-C₆)alkenyl substituted with at least one radical selected from the group consisting of halogen, (C₁-C₆)alkyloxycarbonyl, (C₁-C₆)alkylcarbonyloxy, nitrile and nitro, (C₂-C₆)alkynyl, (C₂-C₆)alkynyl substituted with at least one radical selected from the group consisting of halogen, (C₁-C₆)alkyloxycarbonyl, (C₁-C₆)alkylcarbonyloxy, nitrile and nitro, (C₆-C₂₀)aryl, (C₆-C₂₀)aryl substituted with a radical selected from the group consisting of (C₁-C₆)alkyl, (C₁-C₆)alkyloxy, (C₁-C₆)alkylcarbonyloxy, (C₁-C₆)alkylcarbonyl, (C₁-C₆)alkyloxycarbonyl, and halogen, (C₅-C₂₀)heteroaryl, and (C₅-C₂₀)heteroaryl substituted with a radical selected from the group consisting of (C₁-C₆)alkyl, (C₁-C₆)alkyloxy, (C₁-C₆)alkylcarbonyloxy, (C₁-C₆)alkylcarbonyl, (C₁-C₆)alkyloxycarbonyl, and halogen;
R₅, R₆, R₆', R₇ and R₈ are each independently selected from the group consisting of hydrogen, halogen, (C₁-C₆)haloalkyl and (C₁-C₆)alkyl;
R₉ and R₁₀ are each hydrogen; or, alternatively,
one of the pairs R₇ and R₉ or R₈ and R₁₀, together with the carbon atoms to which they are attached, form a carbocyclic ring system comprising from 3 to 7 membered carbocyclic rings, said rings being independently saturated, unsaturated or aromatic and being optionally substituted with one or more groups selected from the group consisting of (C₁-C₆)alkyl, (C₁-C₆)alkyloxy, (C₁-C₆)haloalkyl, (C₁-C₆)alkylcarbonyloxy, (C₁-C₆)alkylcarbonyloxy, nitro , cyano and halogen; and
R₁₁ is a radical selected from the group consisting of hydrogen, (C₁-C₆)alkyl and (C₁-C₆)haloalkyl.

10. The process according to claim 9, wherein the salt of the compound of formula (I) is selected from the group consisting of a trifluoroacetate, a trifluoromethanesulfonate, a phosphate, an acetate, and a hydrochloride salt.

11. The process according to any one of claims 9 or 10, wherein the weak acid is selected from the group consisting of acetic acid, benzoic acid, optionally substituted at any available position with a group selected from the group consisting of halogen and nitro, camphorsulfonic acid, sulfinic acid, (R)- or (S)-mandelic acid, propanoic acid, and 4-nitrophenol.

12. The process according to any one of claims 9 to 11, wherein the salt of compound of formula (I) is a trifluoromethanesulfonate and the acid is 3-nitrobenzoic acid.

13. The process according to any one of claims 9 to 12 carried out under continuous flow conditions.

14. A process for the preparation of a pharmaceutically active compound, or a pharmaceutically acceptable salt thereof, comprising in its chemical structure a moiety derived from compound of formula (VI) 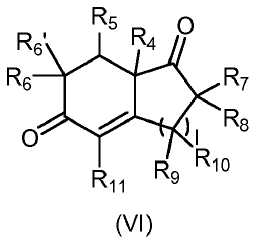 wherein R₄, R₅, R₆, R₆', R₇, R₈, R₉, R₁₀, and R₁₁ are as defined in claim 9, the process comprising a) carrying out the process for the preparation of a compound of formula (VI) as defined in any one of claims 9 to 13,
and further comprising: b) submitting the compound of formula (VI) to several reactions until obtaining the pharmaceutically active compound, or a pharmaceutically acceptable salt thereof; c) optionally converting the obtained pharmaceutically active compound into the free acid form of the pharmaceutically active compound or into a pharmaceutically acceptable salt thereof; and d) optionally, converting the resulting free acid or base form of the pharmaceutically active compound into a pharmaceutically acceptable salt thereof, or converting the resulting pharmaceutically acceptable salt into their free acid or base form, or converting the resulting pharmaceutically acceptable salt into a different pharmaceutically acceptable salt of the pharmaceutically active compound.

15. The process of claim 14, wherein the pharmaceutically active compound is selected from longifolene, seychellene, paspalinine, (-)-glaucarubolone, adrenosterone, taxol, O-methylshikoccin, halenaquinol, stachybotrylactam, penitrem D, pallavicicin, beta-corymbolol, 1-epi-pathylactone A, confertin, pallescensin A, (+)-albicanol, (+)-cleomelide, scopadulcic acid B, digitoxigenin, avarone, bactraacchotoxinin A, sativene, scabronine G, xylarenal A, oidolactone B, cortistatin A, and (+)-bakkenolide A.
